(19) Europäisches Patentamt
European Patent Office
Office européen des brevets

(11) **EP 4 001 948 B1**

(12) **EUROPEAN PATENT SPECIFICATION**

(45) Date of publication and mention
of the grant of the patent:
**22.10.2025 Bulletin 2025/43**

(21) Application number: **20306380.5**

(22) Date of filing: **13.11.2020**

(51) International Patent Classification (IPC):
***G01S 5/02*** *(2010.01)*

(52) Cooperative Patent Classification (CPC):
**G01S 5/0263; G01S 5/0205**

(54) **DEEP SMARTPHONE SENSORS FUSION FOR INDOOR POSITIONING AND TRACKING**

FUSION VON TIEFEN SMARTPHONE-SENSOREN ZUR POSITIONIERUNG UND VERFOLGUNG IN INNENRÄUMEN

FUSION PROFONDE DE CAPTEURS DE TÉLÉPHONES INTELLIGENTS POUR LE POSITIONNEMENT ET LE SUIVI À L'INTÉRIEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.05.2022 Bulletin 2022/21**

(60) Divisional application:
**23153904.0 / 4 194 881**

(73) Proprietor: **Naver Corporation
Seongnam-si, Gyeonggi-do 13561 (KR)**

(72) Inventors:
• **Chidlovskii, Boris
38240 Meylan (FR)**
• **Antsfeld, Leonid
38330 Saint Ismier (FR)**
• **Sansano, Emilio
12200 Onda (ES)**

(74) Representative: **Grünecker Patent- und
Rechtsanwälte
PartG mbB
Leopoldstraße 4
80802 München (DE)**

(56) References cited:
**US-A1- 2016 227 366    US-A1- 2018 259 350**

• **GU FUQIANG FUQIANGG@STUDENT UNIMELB EDU AU ET AL: "Indoor Localization Improved by Spatial Context-A Survey", ACM COMPUTING SURVEYS, ACM, NEW YORK, NY, US, US, vol. 52, no. 3, 3 July 2019 (2019-07-03), pages 1 - 35, XP058450992, ISSN: 0360-0300, DOI: 10.1145/ 3322241**
• **GU YANLEI ET AL: "Integration of positioning and activity context information for lifelog in urban city area", NAVIGATION: JOURNAL OF THE INSTITUTE OF NAVIGATION, INSTITUTE OF NAVIGATION, FAIRFAX, VA, US, vol. 67, no. 1, 1 March 2020 (2020-03-01), pages 163 - 179, XP056015859, ISSN: 0028-1522, DOI: HTTPS:// DOI.ORG/10.1002/NAVI.343**
• **XIE ANG ET AL: "Learning While Tracking: A Practical System Based on Variational Gaussian Process State-Space Model and Smartphone Sensory Data", 2020 IEEE 23RD INTERNATIONAL CONFERENCE ON INFORMATION FUSION (FUSION), INTERNATIONAL SOCIETY OF INFORMATION FUSION (ISIF), 6 July 2020 (2020-07-06), pages 1 - 7, XP033824779, [retrieved on 20200909], DOI: 10.23919/FUSION45008.2020.9190598**
• **ASHRAF IMRAN ET AL: "MINLOC:Magnetic Field Patterns-Based Indoor Localization Using Convolutional Neural Networks", IEEE ACCESS, IEEE, USA, vol. 8, 3 April 2020 (2020-04-03), pages 66213 - 66227, XP011784254, [retrieved on 20200416], DOI: 10.1109/ACCESS.2020.2985384**

EP 4 001 948 B1

**Description**

**Technical Field**

This disclosure relates to indoor positioning and tracking of portable electronic devices.

**Background**

Location-based services on portable electronic devices such as smartphones and tablet computers are widely used. Such services require reliable positioning and tracking technologies for portable electronic devices. While satellite-positioning systems such as GPS and Galileo provide reliable positioning outdoors, achieving comparable positioning accuracy in indoor environments, which may be fully enclosed or partially enclosed, remains challenging. Indoor location-based services allow relevant social and commercial benefits, increasing the technological need to provide solutions for correct indoor positioning.

Methods for smartphone-based indoor positioning of the prior art exhibit strengths and weaknesses under different conditions. These techniques employ different sensors contained in typical smartphones. Network sensors such as Wi-Fi sensors and Bluetooth sensors, may be employed to estimate signal strengths received at an indoor location from several access points distributed within the indoor environment, that can be employed as RSS fingerprints to estimate the position of the portable electronic device.

Wi-Fi fingerprinting is the most popular technique for smartphone-based indoor positioning (Davidson and Piché: "A survey of selected indoor positioning methods for Smartphones", IEEE Communications Surveys Tutorials, 19(2):1347-1370; Gressmann et al.: Towards ubiquitous indoor location based services and indoor navigation. In 7th Workshop on Positioning Navigation and Communication, WPNC, pages 107-112. IEEE, 2010; Khalajmehrabadi et al.:" Modern Wlan fingerprinting indoor positioning methods and deployment challenges", IEEE Communications Surveys Tutorials, 19(3):1974-2002, 2017; Ma et al.:"Wifi sensing with channel state information: A survey", ACM Comput. Surv., 52(3):46:1-46:36, June 2019; Wang et al.: "Pedestrian Stride-Length Estimation Based on LSTM and Denoising Autoencoders", Sensors, 19(4), 2019). Positioning is performed by matching a measured Wi-Fi fingerprint with a reference fingerprint collected before. The location associated with the closest matching reference fingerprint is returned as a position estimate. The position estimate may be based on a simple nearest-neighbor matching (Gressmann et al.) which may be improved by using Gaussian processes that allow to extrapolate to areas with no reference data, as described in Ferris et al.: "Wifi-slam using gaussian process latent variable models", in: Proc. 20th Intern. Joint Conference on Artificial Intelligence (IJCAI), pages 2480-2485, 2007. To yield accurate positioning, the Wi-Fi fingerprints should be densely recorded and annotated with exact locations. The problem of scarcity of annotated radio is addressed by Yuanet et al., "Efficient Wifi fingerprint training using semi-supervised learning", in: Ubiquitous Positioning Indoor Navigation and Location Based Service, pages 148-155, 2014 by employing an efficient fingerprint training method based on semi-supervised learning approaches. Another approach is proposed in Yoo and Johansson, "Semi-supervised learning for mobile robot localization using wireless signal strengths", in: Intern. Conf. Indoor Positioning and Indoor Navigation (IPIN), pages 1-8, 2017 by employing a semi-supervised method for localization with pseudo-labels for unlabeled data yielded from a Laplacian embedded regression least square approach. Yet another solution to the lack of annotated radio data is described by Chidlovskii and Antsfeld, "Semi-supervised variational autoencoder for Wifi indoor localization", in: Intern. Conf. Indoor Positioning and Indoor Navigation (IPIN), pages 1-8. IEEE, 2019 by proposing training a variational autoencoder for Wi-Fi-based position prediction.

Approaches for indoor positioning using Wi-Fi and Bluetooth data is infrastructure-dependent. Hence, to achieve good performance, these systems require a large number of access points with a large coverage. Moreover, severe RSS fluctuations often render inaccurate positioning results and lead to the localization error of 2-3 m.

Another category of localization systems is infrastructure-free (Gu et al.: "Indoor localization improved by spatial context - a survey", ACM Comput. Surv., 52(3):64:1-64:35, July 2019). This category includes positioning systems based on an inertial measurement unit (IMU) and a magnetometer. These sensors have a cost advantage over other sensors commonly used for localization. Pedestrian Dead Reckoning (PDR) systems utilize the accelerometer and gyroscope of the mobile phone to track the user's path. PDR systems can provide a relative position only and require a starting position. Elements containing iron elements (walls, pillars, windows) often create unique magnetic anomalies, which can be utilized for a magnetic field based approach.

PDR approaches rely on combining step detection, step length estimation and user heading estimation from accelerometer, gyroscope and magnetometer data streams. PDR can achieve accurate positioning over short distances but is subject to drift over a long distance. PDR approaches rely on step detection, step length estimation and heading determination. According to the state of the art, PDR approaches are subject to heavy parameter tuning, because step length depends on the user's characteristics such as height and age or even for the same user may vary according to user activity. Step detection algorithms of the state of the art, such as peak detection, flat zone detection and zero crossing detection also rely on heavy parameter tuning (Shin et al.: "Adaptive step length estimation algorithm using low-cost mems inertial sensors", in: IEEE Sensors Applications Symposium, pages 1-5, 2007).

The AMID method (Lee et al.: "Accurate magnetic indoor localization using deep learning", Sensors, 2018) proposes an indoor positioning system that recognizes magnetic sequence patterns using a deep neural network. Features are extracted from magnetic sequences, and the deep neural network is used for classifying the sequences based on patterns that are generated by nearby magnetic landmarks. However, the method fails when similar magnetic signatures are present in very different places. The location of a sensor cannot be accurately detected, since the same magnetic anomalies may be present in different locations caused by the same ferromagnetic objects.

Hence, both Wi-Fi-based positioning methods and PDR have serious limitations. To improve the accuracy of positioning, identification of landmarks based on specific sensor patterns has been proposed, such as in Sousa Lima et al.: "Human activity recognition using inertial sensors in a smartphone: An overview", Sensors, 19(14):3213, 2019, and Wang et al.: "Indoor localization using smartphone magnetic and light sensors: a deep LSTM approach", MONET, 25(2):819-832, 2020. Similarly, Deng et al.: "Continuous indoor positioning fusing wifi, smartphone sensors and landmarks", Sensors 16 (09), 2016 propose fusing Wi-Fi positioning, PDR and landmark detection.

Accordingly, there is a need for an improved method of predicting an absolute position of a portable electronic device from radio signal data and/or magnetic field data in an accurate manner.

US 2016/0227366 A1 relates to a system and method for integrating wireless measurements including at least angle of arrival measurements with a navigation solution. The integrated navigation system provides an enhanced integrated navigation solution of a device within a platform. The device may include sensors such as for example, accelerometers, gyroscopes, magnetometers, barometer among others.

US 2018/0259350 A1 relates to cart navigation using a portable device that is conveyed by the cart. The portable device may have an integrated sensor assembly integrated with a sensor outputting data representing motion of the portable device. From the motion sensor data, it may be determined if the portable device is in a cart motion mode. Further, the motion sensor data may be reconstructed, a heading misalignment angle calculated and steps taken by the user detected. From this information, dead reckoning for the cart may be performed.

GU YANLEI ET AL: "Integration of positioning and activity context information for lifelog in urban city area", NAVIGATION: JOURNAL OF THE INSTITUTE OF NAVIGATION, INSTITUTE OF NAVIGATION, FAIRFAX, VA, US, vol. 67, no. 1, 1 March 2020 proposes detecting location-related activities and use the activity information to improve positioning accuracy. In the proposed system, a human activity recognition module is developed to extract location-related activities from multisensory streams of smartphones. After that, the proposed system integrates activity information with PDR-based positioning results.

XIE ANG ET AL: "Learning While Tracking: A Practical System Based on Variational Gaussian Process State-Space Model and Smartphone Sensory Data", 2020 IEEE 23RD INTERNATIONAL CONFERENCE ON INFORMATION FUSION, INTERNATIONAL SOCIETY OF INFORMATION FUSION, 6 July 2020 relates to a wireless indoor tracking system based on the variational Gaussian process state-space model with smartphone-collected WiFi received signal strength and inertial measurement unit readings.

## Summary

it is the object of the present invention to provide a novel sensor fusion framework for fusing smartphone inertial sensors, magnetic field data, and Wi-Fi measurements for indoor positioning.

This object is solved by the independent claims.

Preferred embodiments are defined by the dependent claims.

The following detailed description and accompanying drawings provide a more detailed understanding of the nature and advantages of the present invention.

## Brief Description of the Figures

The accompanying drawings are incorporated into and form a part of the specification for the purpose of explaining the principles of the embodiments. The drawings are not to be construed as limiting the embodiments to only the illustrated and described embodiments of how they can be made and used. Further features and advantages will become apparent from the following and more particularly from the description of the embodiments, as illustrated in the accompanying drawings, wherein:

**FIG. 1** illustrates a process flow diagram of a method for indoor localization in accordance with at least one embodiment;

**FIG. 2** illustrates a system for indoor localization in accordance with embodiments;

**FIG. 3** illustrates a block diagram of a neural network for PDR according to embodiments;

**FIG. 4** illustrates a block diagram of a neural network for PDR according to other embodiments;

**FIG. 5** illustrates transforming sensors data to a graphical representation in accordance with embodiments;

**FIG. 6** illustrates a process flow diagram of a method for training a neural network for PDR according to embodiments;

**FIGS. 7A and 7B** illustrate sensors data for an example training path employed for training a neural network for PDR in accordance with embodiments;

**FIG. 8** illustrates a process flow diagram of a method for indoor localization in accordance with at least one embodiment;

**FIG. 9** illustrates example reference frames and rotation angles in relation to a mobile phone:

**FIGS. 10A and 10B** illustrate example neural network architectures in accordance with embodiments; and

**FIG. 11** illustrates positions predictions generated according to an embodiment with position predictions of the prior art;

**FIG. 12** illustrates a process flow diagram of a method for indoor localization in accordance with at least one embodiment,

**FIG. 13** illustrates a process flow diagram of a method for selecting landmarks in accordance with an embodiment, and

**FIG. 14** illustrates an example architecture in which the disclosed methods may be performed.

## Detailed Description

Described herein are systems and methods for indoor localization. For purposes of explanation, numerous examples and specific details are set forth in order to provide a thorough understanding of the described embodiments.

The illustrative embodiments will be described with reference to the drawings wherein elements and structures are indicated by reference numbers. Further, where an embodiment is a method, steps and elements of the method may be combinable in parallel or sequential execution. As far as they are not contradictory, all embodiments described below can be combined with each other. Aspects of the present disclosure address the problem of indoor positioning and tracking with a novel sensor fusion framework, fusing smartphone inertial sensors and Wi-Fi measurements. A deep learning approach to pedestrian dead reckoning is proposed. The disclosure further involves methods for generating a large annotated data set for training the neural model for PDR by detecting user motion states and landmarks in raw sensors data and employing these classifications to generate pseudo-labels.

The systems and methods described in this disclosure have been evaluated to the offline setting of the IPIN 2019 Indoor Localization Competition: Track 3 - Smartphone-based (available at http://indoorloc.uji.es/ipin2019track3/), which involves the task of recreating a path walked by a person holding a conventional modern smartphone, based on the readings of the smartphone's sensors.

Further aspects of the present invention address the problem of indoor localization using magnetic field data provided by sensors, such as mobile phone sensors. Magnetic anomalies in indoor environments can be created by different ferromagnetic objects. In an aspect, changes of the Earth's magnetic field due to indoor magnetic anomalies can be captured and transformed in multi-variate time series. A number of techniques can be used to convert temporal patterns in visual patterns. For example, Recurrence plots, Gramian Angular Fields and Markov Transition Fields can be used to represent magnetic field time series as image sequences. In an aspect, a landmark-based classification can be complemented with deep regression on a sensor position or the associated user position by combining convolutional and recurrent layers. In an aspect, a prediction of the neural network can be bootstrapped with noisy starting estimation.

Embodiments of the present invention have been tested on the MagPie dataset (David Hanley, Alexander B. Faustino, Scott D. Zelman, David A. Degenhardt, and Timothy Bretl. Magpie: "A dataset for indoor positioning with magnetic anomalies", Eigth International Conference of Indoor Positioning and Indoor Navigation (IPIN), 2017) for evaluating magnetic field-based localization methods.

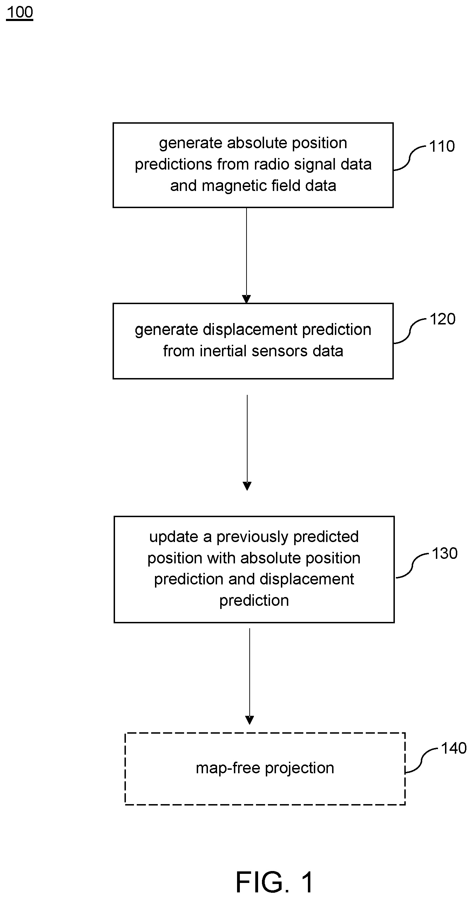

**Figure 1** illustrates a flowchart of a method 100 for indoor localization. Method 100 can be employed for predicting a position of a portable electronic device, such as a smartphone in an indoor environment, from sensors data provided by built-in sensors of the portable electronic device.

Method 100 comprises step 110 of generating predictions for an absolute position of the portable electronic device from radio signal data and/or magnetic field data, or from similar physical environment data sensed by dedicated sensors. The portable electronic device is usually equipped with a Wi-Fi sensor configured to capture radio signals. The Wi-Fi sensor is configured to generate RSS data from radio access points in the neighborhood, such as Wi-Fi access points. Usually, the time interval for collection of Wi-Fi data is relatively long, such as once every 4 seconds.

Generating predictions for the absolute position from radio signal data may be repeated with a first rate, and generating predictions for the absolute position from magnetic field data may be repeated with a second rate, which may be larger than the first rate.

In an embodiment, generating an absolute position prediction from Wi-Fi data may be based on a semi-supervised learning paradigm, which combines low-cost collected non-annotated Wi-Fi data with a limited set of annotated Wi-Fi data. In an embodiment, a method based on a VAE is employed, such as described in European Patent Application 19306204.9. The VAE encoder-decoder architecture involves an encoder mapping the obtained RSS data into a latent variable and acts as a regressor of the available labeled data. The VAE decoder functions as a regularizer on labeled and unlabeled data. A classification neural network may be employed to employ the latent variable to generate a predicted location.

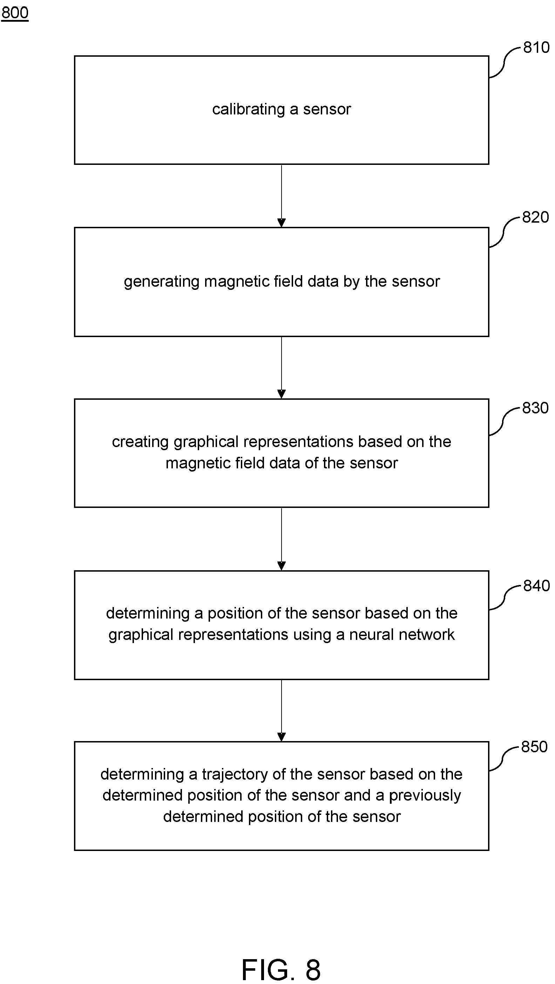

Additionally or alternatively, generating the absolute position prediction may be based on employing magnetic field data, as explained in further detail below with reference to Figures 8 to 10, 12, and 13.

Method 100 further comprises step 120 of generating a displacement prediction employing inertial sensors data inputted to a trained neural network. Inertial sensors data are usually provided by the device's IMU sensors at high rate, allowing the trained neural network to generate local displacement predictions $\Delta x$, $\Delta y$ at high rate. The high rate may be larger than the first rate of repeating predicting the absolute position from radio signal data and the second rate of predicting the absolute position from magnetic field data.

In embodiments, step 120 may comprise converting the inertial sensors data to a graphical representation, which is inputted to the trained neural network to generate horizontal displacement predictions $\Delta x$ and $\Delta y$. Barometer sensor data may be employed to generate vertical displacement prediction $\Delta z$.

According to embodiments described in further detail below, the neural network for displacement prediction may comprise a CNN, or an RNN. According to other embodiments, the graphical representation of the sensors data may be based on building a recurrence matrix.

Method 100 further comprises step 130 of predicting a position by updating a previously predicted position with the displacement prediction and/or the absolute position predictions. Because the absolute position predictions are usually available at a relatively low rate, while the displacement prediction is usually generated at a high rate, updating the predicted position with the displacement predictions only may be performed at a high rate, while updating the predicted position with the absolute position predictions may be performed at a low rate. A sequence of predicted positions may be determined by fusing a plurality of displacement predictions with at least one absolute position prediction. Employing at least one absolute position prediction in addition to the displacement predictions allows improving accuracy because the absolute position prediction can correct for systematic drift of the prediction arising from summing a plurality of displacement predictions.

In embodiments, a Kalman filter may be based for fusing the absolute position prediction and the displacement prediction to generate a predicted position. Employing a Kalman filter based approach is particularly suitable for resource-limited smartphones, because it is computationally lightweight. In embodiments, a Kalman filter may be employed as a sensor fusion framework for combining PDR predictions generated at a high rate with absolute position predictions generated at relatively low rate. In embodiments, a Kalman filter may be employed as described in Chen, "Fusion of Wifi, smartphone sensors and landmarks using the Kalman filter for indoor localization", Sensors, 15(1):715-732, 2015.

Method 100 optionally comprises step 140 of applying a map-free projection to the location predicted in step 130. Step 140 may correct a location predicted in step 130 that lies outside of the indoor location to a location within the indoor location, for example, by projecting the predicted location to a convex hull of known indoor locations, as explained in further detail below.

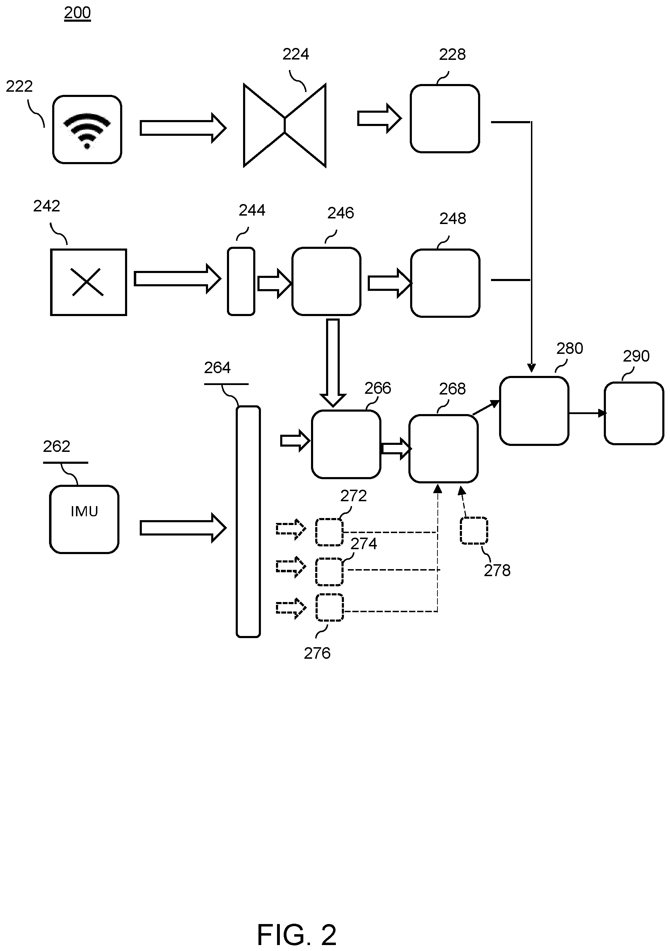

**Figure 2** illustrates a system 200 configured for performing method 100. System 200 relies on sensors data provided by sensors 222, 242, and 262. Sensor 222 may be a sensor for radio signal data such as a Wi-Fi sensor providing RSS data. Sensor 242 may be a magnetometer comprised in the portable electronic device, configured to measure magnetic field data at the current location of the portable electronic device. Sensor 262 may comprise several IMU sensors, such as an accelerometer and a gyroscope, which are typically provided in portable electronic devices such as smartphones.

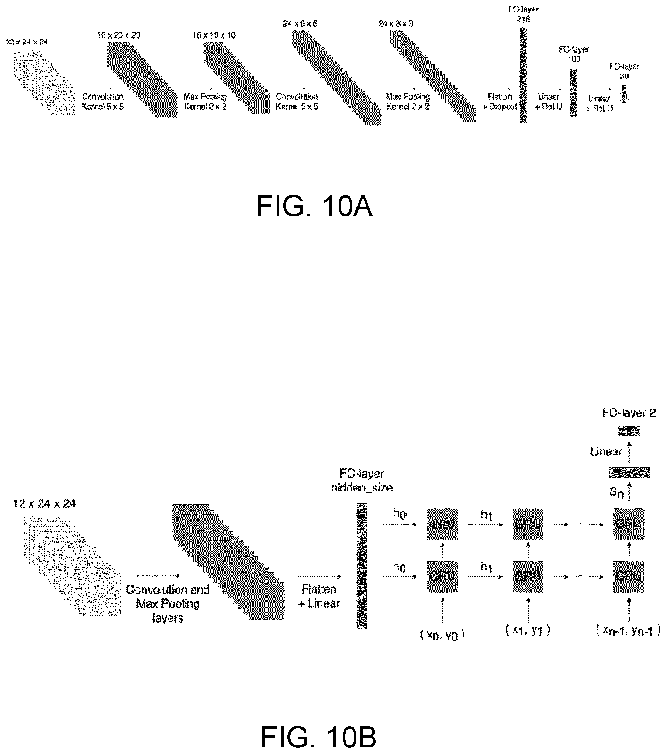

Magnetic field data provided by magnetometer 242 may be pre-processed by block 244. Pre-processed magnetometer data may be provided to transform block 246 configured to generate a graphical representation of the magnetic field data such as by generating a recurrent plot. The graphical representation may be provided to neural network 248. As explained in further detail below, neural network 248 may comprise a multichannel CNN followed by an RNN. Neural network 248 may be configured to generate an absolute location prediction as explained below with reference to Figures 10A and 10B. Because magnetometers of portable electronic devices are usually configured to generate magnetic field data at moderate rate, the pipeline of magnetometer 242, pre-processing block 244, transform block 244, and neural network 248 may provide an absolute position prediction at a moderate rate.

IMU sensors 262 may provide inertial sensor data at a high rate. After pre-processing block 264, the data stream may be transformed to a graphical representation by transform block 266. As explained in further detail below, transform block may correspond to constructing a graphical representation from data in a sliding window running over the IMU data stream. The graphical representations of the IMU data stream may be provided to neural network 268 trained for inferring from the image-framed input a displacement prediction corresponding to a prediction of a change in the user's position. As explained in further detail below, neural network 268 may comprise a CNN or an RNN. In embodiments, transform block 266 may transform sensors data in a raw mode, merely forming a graphical representation from the sensor's data values such as by translating a data value to a color value of a pixel and concatenating the pixels for all sensor dimensions.

Alternatively, transform block 266 may employ forming a recurrent matrix to build the graphical representation.

System 200 further comprises components for generating an absolute position prediction from radio signal data such as Wi-Fi RSS data. Network sensor 222 may be configured to collect radio signal data at comparatively low rate. The radio signal data may be inputted to a pipeline of neural networks 224 and 228 for generating an absolution position prediction according to a Wi-Fi fingerprinting positioning method. In embodiments, neural network 224 implements a VAE, and neural network 228 may implement a classification neural network configured for determining an absolute position prediction from a latent variable of the VAE 224, as disclosed in European Patent Application 19306204.9. Employing a VAE significantly reduces the need for the labeled data, because it allows combining a small amount of the labeled data (10-15%) with a massive set of non-annotated Wi-Fi observation dataset to build an accurate predictor for the localization component.

Sensor fusion module 280 may be configured to fuse the displacement prediction by the pipeline of IMU sensors 262, transform block 266, and neural network 268, generated at a relatively high rate, with the absolute position prediction generated by the pipeline of magnetometer 242, transform block 244, and neural network 248, and/or the absolute position prediction generated by the pipeline of network sensor 222, and neural networks 224 and 228. In comparison with the high rate of prediction of pipeline 262, 264, 266, and 268, pipeline 242, 244, and 248 and pipeline 222, 224, 228, generate predictions at relatively low rate, so that sensor fusion module 280 employs displacement prediction to update a position frequently, and employs the one or more absolute position predictions relatively rarely. The update of the position employing the one or more absolute position predictions, though rarely, can correct the drift due to accumulation of errors in displacement prediction.

Predictions generated by sensor fusion module 280 may lie outside the target space, e.g. outside of the building. A straightforward solution of overcoming this problem is to access a location map of the indoor environment and correcting the predictions of the sensor fusion module 280 based on whether the prediction is inside the indoor environment according to the location map. Instead, to yield a system more generic and map-independent, the present disclosure proposes applying a map-free projection of the prediction generated by the sensor fusion module 280. Projection module 290 is configured for calculating a weighted neighborhood prediction in which a top matching number $N_r$ of neighbors in the available annotated training set are considered. The absolute position prediction is then yielded as a weighted sum of the positions of the identified nearest neighbors. The weighted sum employs weights that are calculated as an inverse of distances between the prediction and corresponding neighbors, hence defining a convex hull defined by the $N_r$ neighbors.

**Figure 2** also illustrates, employing dashed lines, data flow and modules used for training neural network 268. Training data usually contain only a small number of ground truth annotations 278. During training, pre-processed data is provided to landmark detector 272, activity classifier 274, and speed and stride estimator 276. In a pre-training step, landmark detector 272 may be trained for predicting a landmark from the pre-processed sensors data. Landmarks may generally refer to direction changes such as when a user reaches a corner of a corridor and turns to carry on walking in the corridor. Landmark detector 272 may employ orientation vectors to detect orientation changes. Landmark detector 272 may correlate orientation data with other sensors data and/or landmark ground-truth to classify presence of a landmark. Orientation vectors may be estimated from accelerometer, gyroscope and magnetometer data. In embodiment, landmark detector 272 is implemented with a random forest model.

Activity classifier 274 may be trained to classify the IMU sensor data to infer whether a user, carrying the portable electronic device used for generating the training data, was walking or was standing still.

Further, during training, speed and stride estimator 276 may be trained to estimate a speed and stride of the user from sensors data. Output of landmark detector 272, activity classifier 274, and speed and stride estimator 276, are employed for generating pseudo-labels, as will be explained in further detail below. Generating pseudo-labels allows overcoming the scarcity of annotations 278, so that available training sensors data collected by IMU sensors 262 may be annotated with the generated pseudo-labels to generate fully annotated training data for training neural network 268.

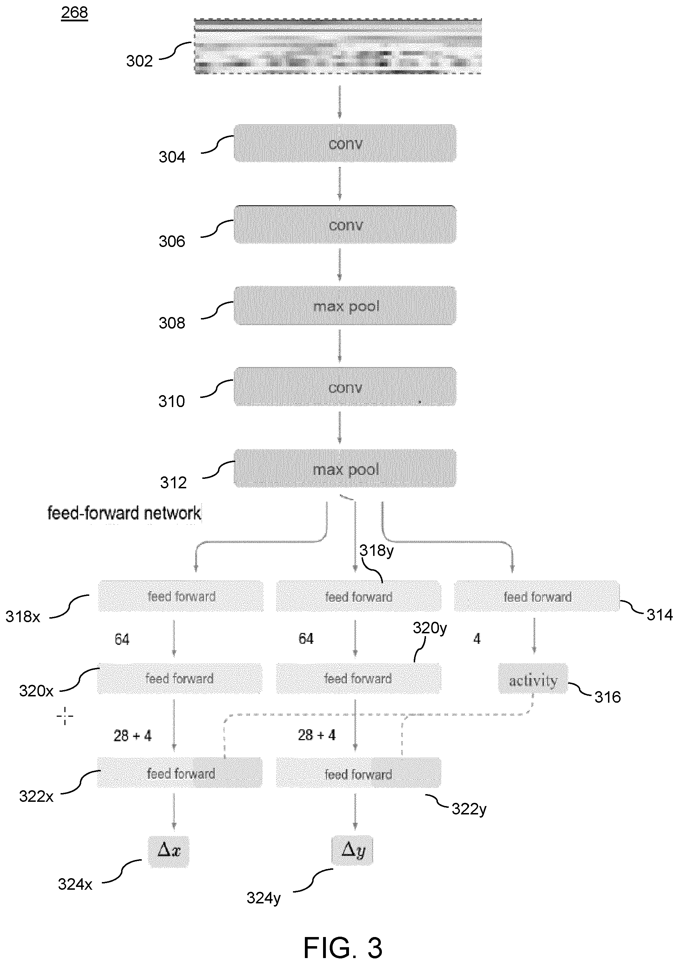

**Figure 3** illustrates an implementation of neural network 268 for PDR based on CNN. Neural network 268 may receive graphical representation 302 obtained from sensors data. Graphical representation 302 may be processed by convolution layers 304 and 306, followed by max-pooling layer 308, convolution layer 310 and max-pooling layer 312. Output of max-pooling layer 312 may be provided to feed-forward layers 318x, 318y and 314. Output of feed-forward layer 314 may be employed to generate an activity classification 316. Output of feed-forward layers 318x and 318y may be processed by respective pipelines of feed-forward layers 320x, 320y, followed by feed-forward layers 322x, 322y, respectively, to generate predictions 324x, 324y, that correspond to displacement predictions $\Delta x$ and $\Delta y$ for displacement of the portable electronic device relative to a previously determined position.

The implementation of neural network 268 of Figure 3 hence involves three convolution layers and two max-pooling layers, followed by fully connected layers. The max-pooling layers help improving the overall accuracy of the predictions generated by the CNN. Furthermore, the convolution kernels, in convolution layers 304, 306, 310, vary in function of the input image size. Pooling layers 308, 312, can extract features of the convolution layer output by reducing the number of rows and columns of the image. In embodiments, max-pooling layers 308 and 312 involve a two-by-two filter with stride 2 to store the maximum value of the two-by-two subsections of the invention. At the final stage of CNN, fully connected layers 322x, 322y with softmax activation function calculate the output of the CNN.

Employing CNNs as neural network 268 for PDR allows identifying correlations between sensors. In particular, CNNs can exploit the local dependency characteristics inherent in multimodal time series sensors data. Furthermore, employing CNNs allows leveraging the translational invariant nature of movement.

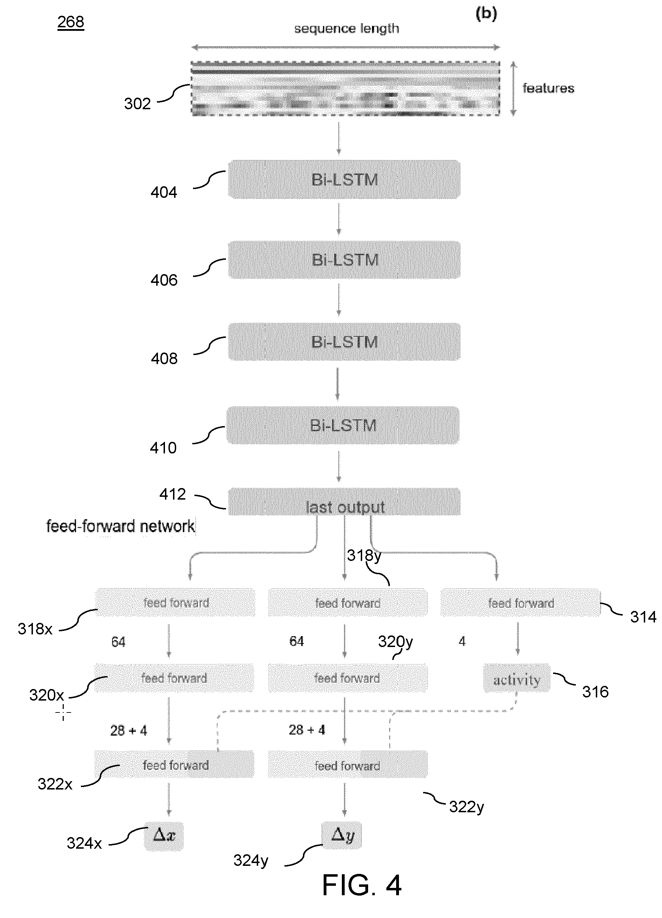

**Figure 4** illustrates an alternative embodiment of neural network 268 for PDR. Graphical representation 302 of the sensors data may be processed by a pipeline of bi-LSTM layers 404 to 410. Last output layer 412 may be configured to provide output to feed-forward layers 314, 318x, and 318y, that are configured to generate predicted displacements 324x, 324y, in an identical manner, as described above with reference to **Figure 3.**

The embodiment of neural network 268 according to **Figure 4** employs RNNs, which are specialized in processing sequences of values and capturing long distance interdependencies in the input stream. Because RNNs can pass information from one time step to the next, they are configured to capture information about previous values in the input stream. In particular, RNNs are suited for capturing temporal patterns in time series data of IMU sensors data. The RNN-based embodiment according to Figure 4, employs feeding the time series data in a bi-directional manner so that the bi-LSTM are trained to recognize patterns in both temporal directions. LSTM networks have been proposed to overcome the vanishing and exploding gradient problems of more conventional RNN, while also efficiently learning long-range dependencies.

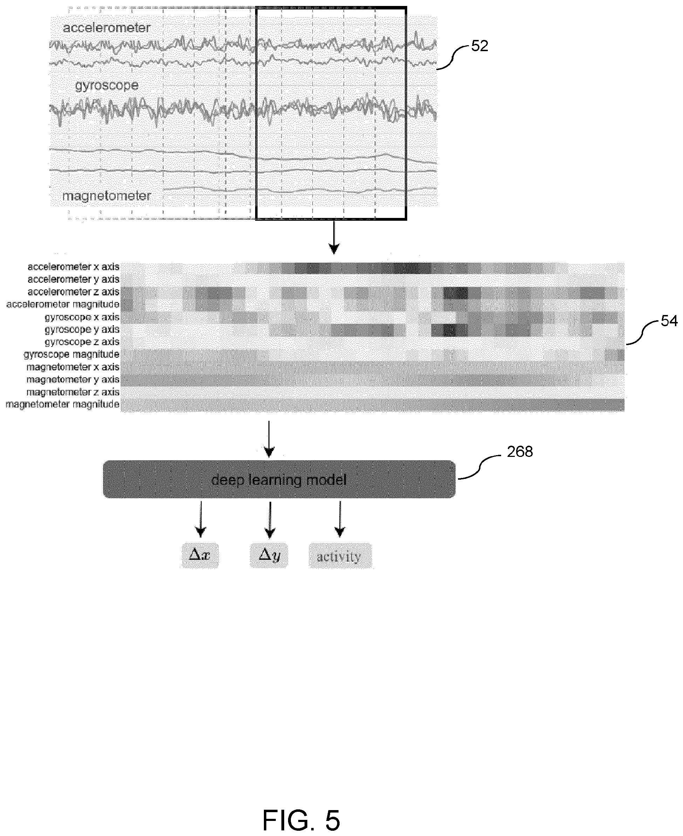

**Figure 5** illustrates generating graphical representations from sensors data. **Figure 5** displays graphs of accelerometer, gyroscope and magnetometer data values. Each of the accelerometer, gyroscope and magnetometer provide data values for the respective values along the X, Y, Z axes. The data values illustrated in line plots 52 are transformed to graphical representation 54. In the illustrated embodiment, data values are employed to determine a color saturation of a pixel of graphical representation 54, producing a row of pixels for each sensors data dimension. According to embodiments, a positive data value may determine a color saturation of the pixel in a first color dimension, such as an rgb color dimension, and a negative data value may determine a color saturation of the pixel in a second color dimension, such as a different an rgb color dimension. By concatenating all sensors data, a graphical representation with dimension $\Delta t \times d$ is yielded, wherein $\Delta t$ is the size of the considered sliding time window. The width of $\Delta t$ determines the width of each data point for input to neural network 268. In an embodiment, before producing graphical representation 54 the sensors data is down-sampled to a frequency of 50 Hz, which is a frequency sufficient to characterize any user's displacement. In embodiments, the window width corresponds to 1 second, so that each data point of graphical representation 54 has fifty columns, $\Delta t=50$.

**Figure 5** illustrates an embodiment with a total of twelve features corresponding to three sensors, accelerometer, gyroscope and magnetometer, and for each sensor one row for each axis and one row for the magnitude calculated from the combined X, Y, Z values. As has been explained in detail above, neural model 268 has one regression branch for predicting a displacement $\Delta x$, $\Delta y$ and a classification branch for predicting a user activity. The embodiment illustrated in Figure 5 corresponds to a raw data mode where neural network 268 is fed with sensors data values (e.g. accelerometer and gyroscope data values from transform block 266, and magnetometer data values from transform block 246) directly translated to graphical representation 54. Alternatively, graphical representation may be formed based on a recurrence matrix.

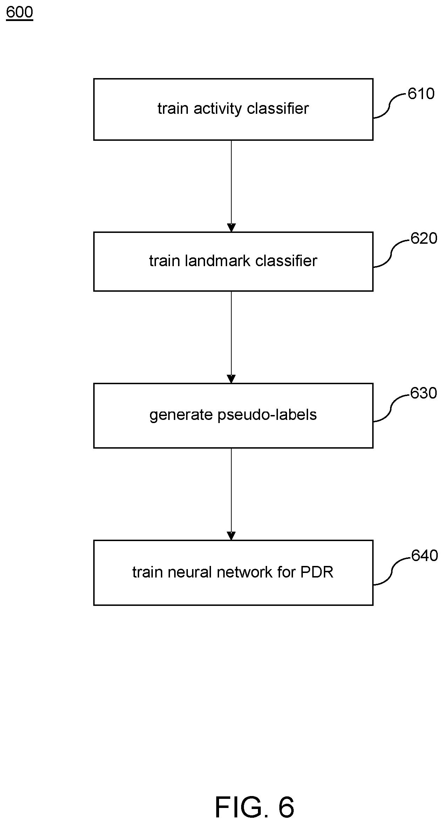

**Figure 6** illustrates method 600 for training a neural network for PDR. Method 600 may employ training data captured by a user carrying the portable electronic device, which records sensor readings. The training data comprises recorded sensor readings and annotations for a limited number of landmarks. Method 600 allows annotating the raw sensors data generated at a high rate with pseudo-labels. Generating pseudo-labels is based on pre-training for the simple tasks of user activity classification and landmark detection.

Method 600 comprises step 610 of training an activity classifier for distinguishing between the user walking and the user standing still. Further, method 600 comprises step 620 of training a landmark classifier. It is thereby assumed that the landmarks provided with the data refer to direction changes of the user trajectory during capturing the training data. Training according to method 600 in particular assumes that there are no changes in orientation on the user's trajectory between two consecutive landmarks, so that the user's trajectory between the points corresponding to the landmarks is a straight line.

Because training an activity classifier for activity classification and training a landmark classifier for landmark classification are relatively easy tasks, the activity classifier and the landmark classifier may be trained to achieve high accuracy, which ensures high accuracy of the generated pseudo-labels.

Method 600 comprises step 630 of generating pseudo-labels based on this assumption on user motion between landmarks. However, the user's speed along the trajectory is allowed to vary due to an obstacle such as a door or other people encountered on the trajectory. Generating the pseudo-labels employs determining the speed along the trajectory between landmarks by obtaining a number of steps from data from the accelerometer. The speed is adjusted based on distance between consecutive landmarks and their corresponding time stamps. The assumption that the user's trajectory is along a straight line between any two consecutive landmarks, is validated in most indoor environments, which often involve buildings with long corridors. Hence, the error incurred by this assumption is limited to situations such as user choices between multi-door passages and the width of corridors.

Method 600 further comprises step 640 of training a neural network for PDR to generate displacement predictions. Training 640 the neural network for PDR comprises enriching the training set with the generated pseudo-labels and employs the enriched training set for training the neural network for PDR. Training the neural network for PDR comprises training for regression and training for activity prediction. Training for regression is aimed at predicting displacement $\Delta x$, $\Delta y$. Training the neural network for PDR may comprise training with a usual cross-entropy loss $\text{Loss}_{ce}$, while training the neural network for PDR for regression may involve minimizing an $L_2$ loss over a set of 2D points according to

$$\text{Loss}_{\text{regr}} = \frac{1}{N} \sum_{n=1}^{N} \|(\Delta \widehat{x_n}, \Delta \widehat{y_n}) - (\Delta x_n, \Delta y_n)\|,$$

where $\Delta x_n$, $\Delta y_n$ is yielded from annotation data and $\Delta \widehat{x_n}, \Delta \widehat{y_n}$ is the displacement prediction. For training the neural model for PDR, an Adam optimizer with learning rate $10^{-3}$ is employed. The total training and validation losses are calculated according to

$$\text{Loss}_{\text{total}} = \text{Loss}_{\text{regr}} + \alpha \, \text{Loss}_{ce},$$

where $\alpha$ is a trade-off between regression and activity prediction.

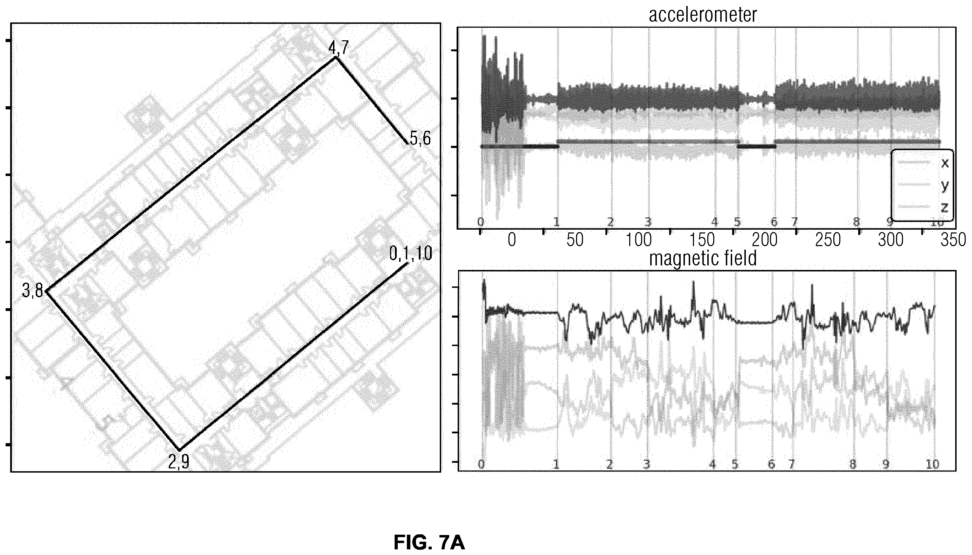

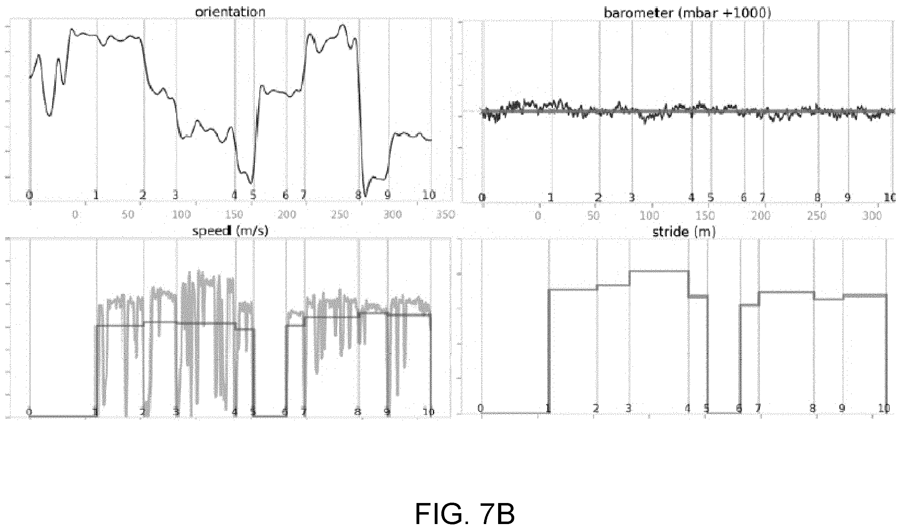

**Figures 7A and 7B** illustrate training date for an example trajectory for training according to method 600. The left panel of **Figure 7A** shows an example user's route comprised in the indoor positioning and indoor navigation of the IPIN Conference challenge. The right panel of **Figure 7A** shows associated sensors data from accelerometer, gyroscope, magnetometer and barometer sensors, as well as speed and stride estimates. The example route spans 10 points, starting by switching on the smartphone at point 0 and letting a calibration terminate. The user then walks through points 1, 2, 3, 4 to point 5. From point 5, the user returns, creating point 6 and walks through points 7, 8, 9 back to the starting position. Points 1 to 5 and 7 to 10 are landmarks, because they involve direction changes. Landmark detector, as described above, is trained to identify points 1 to 5 and 7 to 10 as landmarks, based on employing orientation changes.

The left panel of **Figure 7B** illustrates how orientation changes correlate with the detected landmark positions 1 to 5, and 7 to 10 of the user trajectory. The lower right panel of **Figure 7B** illustrates that parameter data indicates that the trajectory is within a fixed floor, and further displays estimated stride lengths for each trajectory segment between two landmarks.

The systems and methods described in this disclosure have been evaluated to the offline setting of the IPIN competition, which involves the task to recreate a path chosen by a person holding a conventional modem smartphone, based on the readings of the smartphone's sensors. Sensors data was recorded and stored in a logfile using the "Get Sensors Data" Android application. The competition data also contains a set of landmarks consisting of user positions at given time stamps. The training set provided in the competition data consists of 50 logfiles corresponding to fifteen different user trajectories of length of five minutes each, that were traversed multiple times in both directions. A validation set contained 10 logfiles associated with ten different trajectories of ten minutes length. While in the training logfiles, all significant turns have been annotated as landmarks, the validation set comprises trajectories between two consecutive landmarks that are not necessarily along a straight line and may include turns, U-turns, stops and other challenging movements. The evaluation logfile of the IPIN competition contains only recordings of the sensors data for 20 minutes without any landmarks information. The challenge is to recreate the path of the user based on the sensor's data in the evaluation logfile, providing the user position estimations every 0.5 seconds.

The merits of the described systems and methods are evaluated by ablating different components and measuring the corresponding localization errors.

**Table 1**: The best results of IPIN'19 challenge and MAE, 50%, 75% and 90% errors for the disclosed system, by ablating pseudo labels (PLs), RPs, Wi-Fi and map-free projections (PRJ).

| IPIN'19 Indoor Localization Challenge | MAE [m] | 50% Err [m] | 75% Err* [m] | 90% Err[m] |
|---|---|---|---|---|
| Winner | 2.0 | 1.5 | **2.27** | 5.1 |
| 2nd place(*) | **1.7** | **1.3** | 2.36 | **3.9** |
| 3rd place | 2.1 | 1.8 | 2.54 | |
| Disclosed pipeline | | | | |

(continued)

| IPIN'19 Indoor Localization Challenge | | | | | MAE [m] | 50% Err [m] | 75% Err* [m] | 90% Err[m] |
|---|---|---|---|---|---|---|---|---|
| PLs | RPs | Model | Wi-Fi | PRJ | MAE [m] | 50% Err [m] | 75% Err* [m] | 90% Err |
| | | RNN | ✓ | ✓ | 1.79 | 1.33 | 2.44 | 4.50 |
| ✓ | | RNN | ✓ | ✓ | **1.53** | 1.29 | 1.92 | 3.31 |
| ✓ | ✓ | RNN | | ✓ | 2.10 | 1.56 | 2.85 | 4.49 |
| ✓ | ✓ | RNN | ✓ | | 1.74 | 1.47 | 2.19 | 3.32 |
| ✓ | ✓ | RNN | ✓ | ✓ | 1.64 | 1.28 | 1.99 | 3.45 |
| | | CNN | ✓ | ✓ | 1.98 | 1.42 | 2.46 | 4.51 |
| ✓ | | CNN | ✓ | ✓ | 1.54 | 1.16 | 1.99 | **3.21** |
| ✓ | ✓ | CNN | | ✓ | 1.97 | 1.38 | 2.32 | 5.01 |
| ✓ | ✓ | CNN | ✓ | | 2.22 | 1.89 | 2.83 | 4.11 |
| ✓ | ✓ | CNN | ✓ | ✓ | 1.58 | **1.05** | **1.80** | 3.70 |

Table 1 on the top reports the three top results of the challenge and then presents results of the disclosed system when using CNN and RNN as neural networks as deep PDR models. Table 1 reports results when evaluating pseudo-labels, employing Wi-Fi-based absolute position prediction and map-free projection. As can be inferred from Table 1, the best performance of 1.80 meters in the 75% error, is obtained for a system with CNN as deep PDR model, together with employing pseudo-labels and recurrence plots for generating the graphical representations of the sensors data. In comparison, the winner of the IPIN '19 challenge reported an 75% error of 2.27 meters. Ablating Wi-Fi positioning and map-free projection components shows that both these components play an important role for improving accuracy, for both CNN and RNN models.

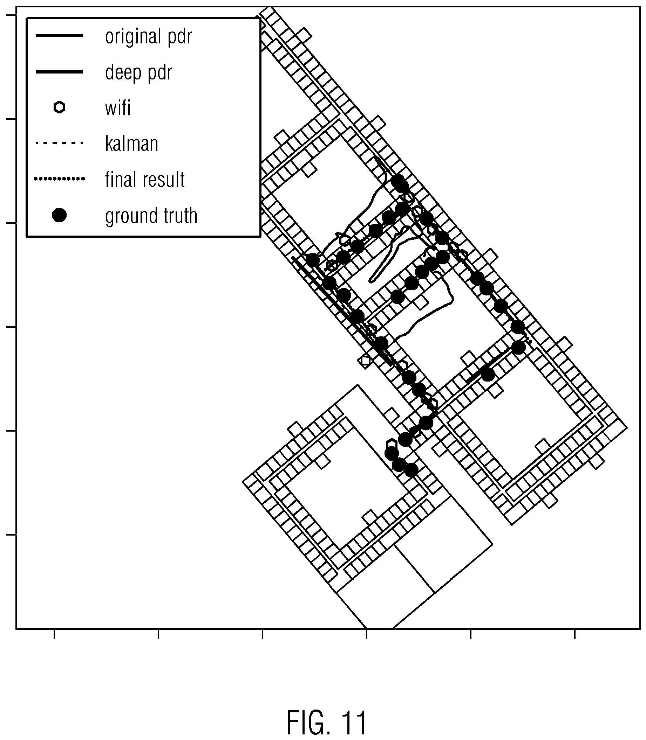

**Figure 11** illustrates positions predictions generated according to components of system 200 described above and predictions of a PDR method of the state of the art.

Further aspects of the present invention relating to the absolute position predictions generated by pipeline 242, 244, 246, 248, addressing the problem of indoor localization using magnetic field data provided by sensors will be described in the following.

Indoor magnetic signatures are disturbances of the Earth's magnetic field induced by various ferromagnetic objects, such as walls, pillars, doors, and elevators. These anomalies become dominant as the distance to the observation point decreases. A multitude of indoor ferromagnetic objects and the disturbances they induce form signatures with unique patterns, which allows classifying these signatures based on their patterns. The magnetic field data may be obtained by sensors, such as a magnetometer, which may be comprised in a mobile computing device, such as a mobile phone. Accordingly, a mobile phone application can be used for sensor based positioning and navigation in an indoor environment.

Magnetic data, collected when users navigate in an indoor environment, may have a sequential nature, which can be formed as a multi-variate time series. In embodiments, the multi-variate time series is converted into one or more visual / graphical representations, such as one or more images. These images can represent different magnetic patterns. The graphical representations may form a multichannel input to convolutional layers that extract position vector embeddings. In an example, the graphical representations can be fed to fully connected (FC) layers. The FC layers can be trained in classification mode to predict the closest landmark or, in regression mode, to directly estimate the user's position coordinates.

These two approaches, the regression-based and landmark-based, are complementary by their concepts of deploying magnetic sensor data. Therefore, they can be combined in a multi-task manner. A wing loss technique can be used to combine the two components by estimating the confidence of each component's predictions and producing a more accurate localization predictor. However, a close analysis showed that both methods actually fail in very similar situations. Their failures are caused by the similar magnetic signatures the system faces in very different places. The explanation is that the same magnetic anomalies are caused by the same ferromagnetic objects, for example, identical armature pillars placed in the different corners of a hall.

According to an embodiment, a deep learning approach is used to benefit from the most recent advances in deep neural networks, including convolutional and recurrent layers and their training. In embodiments, the localization context is captured with recurrent layers, which replace the fully connected layers in the multi-channel deep regression, to help the system or model disambiguate similar magnetic patterns. The convolutional layers extract position embeddings while recurrent layers encode the localization context in internal states to disambiguate similar patterns. The model may be a neural network comprising convolutional neural network (CNN) with one or more convolutional layers and a recurrent neural network (RNN) with one or more recurrent layers.

Models for sequential data may be exposed to the bootstrapping problem. Some models may need to accumulate magnetic sensor data to produce a first prediction. In practice, such an accumulation can take 5 - 10 seconds. Recurrent models may have another constraint in that they require knowing the starting point of a trial. In an embodiment, an approximated location from one or more other models, such as the landmark-based classification or CNN-based regression model, or from other sensors, such as Wi-Fi signals, is used to solve these problems. The approximated location from one or more other models may be noisy prediction. Accordingly, in an embodiment, the model is tested under the starting point estimation error.

Intensive evaluations on the MagPie dataset have shown that embodiments of the present invention contribute to a robust and accurate localization system. Indeed, the localization error for three MagPie buildings can be reduced to 0.30 - 1.05 m, thus improving by a large margin the AMID method with an error of 0.95 - 4.49 m. Model training and evaluation in the pipeline can be done offline. The testing phase can be done online, because the network feed forward with already observed data.

Embodiments comprise a method of converting a local reference frame associated with a local magnetic sensor, e.g. a magnetometer from mobile phone, into global reference frame. The magnetic field data may form a multi-variate time series. The method may comprise converting the multi-variate time series into multi-channel 2D sequences. This allows replacing pattern detection in time series by pattern mining in images and benefits from the recent progress in convolutional and recurrent neural networks. Evaluation of methods according to embodiments on the MagPie dataset shows a low localization error and an improvement of the state of the art methods by a large margin. Embodiments make the magnetic field based positioning systems competitive and comparable to Wi-Fi, Bluetooth, and PDR methods, without requiring any investment in infrastructure.

**Figure 8** is a process flow diagram of an exemplary method 800 for indoor localization in accordance with an embodiment. Method 800 may be applied as a stand-alone solution for indoor positioning. Alternatively, method steps of method 800 may be performed as part of step 110 of method 100 described above.

At optional step 810, the method may comprise calibrating one or more sensors, such as a magnetometer, a gyroscope, and/or an accelerometer of a mobile computing device. For example, the gyroscope may be used to transform a reference frame of a sensor, such as the magnetometer, into a global reference frame.

In step 820, magnetic field data may be generated by a sensor, e.g. the magnetometer, of the one or more calibrated sensors. The magnetic field data may comprise a time series of magnetic field values. For example, the sensor may detect changes in the magnetic field when the sensor is moved in a building or in proximity of objects that interfere with the magnetic field of the earth. The sensor can detect magnetic signatures, which are a based on the magnetic field of the earth and ferromagnetic objects. These signatures are known as anomalies because they disturb the magnetic field of the earth. The impact of these structures becomes dominant as the distance to the observation point decreases. Consequently, these signatures are displaying a uniqueness in their patterns, which allows classifying signatures based on their patterns.

In step 830, visual representations are created based on the magnetic field data of the sensor. Step 830 may comprise selecting a subset of magnetic field values of the time series of magnetic field values, and transforming the subset of magnetic field values or a projection of the subset of magnetic field values into one or more two-dimensional images. The graphical representations may comprise at least one of a recurrence plot, RP, a Gramian Angular Field, such as a Gramian Angular Summation Field, GASF, and/or a Gramian Angular Difference Field, GADF, and a Markov Transition Field, MTF. For example, the graphical representations may comprise at least two, three, or all of a recurrence plot, RP, a Gramian Angular Field, such as a Gramian Angular Summation Field, GASF, and/or a Gramian Angular Difference Field, GADF, and a Markov Transition Field, MTF, which may be input simultaneously in the neural network for a single timestamp.

A first graphical representation, created in accordance with a first method, and a second graphical representation, created in accordance with a second method different from the first method, are inputted simultaneously in the multichannel input to the one or more convolutional layers, wherein the first graphical representation and the second graphical representation are obtained from a same set of magnetic field value. The first and the second method may be methods for a recurrence plot, RP, a Gramian Angular Field, such as a Gramian Angular Summation Field, GASF, and/or a Gramian Angular Difference Field, GADF, or a Markov Transition Field, MTF.

In step 840, a position of the sensor is determined based on the visual representations using a neural network. The neural network comprises a convolutional neural network and a multichannel input to a convolutional layer of the convolutional neural network. The neural network may comprise a recurrent neural network comprising one or more gated recurrent units. The one or more recurrent layers may follow the one or more convolutional layers. Initially, the method may further comprise initializing the recurrent neural network with one or more starting positions obtained from a positioning system, such as an indoor positioning system. For testing, the recurrent neural network may be initialized with a noisy ground truth point or position obtained from the training/testing/validation data.

Step 840 may comprise inputting, in the neural network, a set of visual representations, associated with a first timestamp, of the visual representations and at least one of: (i) one or more previously determined positions, (ii) previously determined feature vectors, and (iii) one or more sets of visual representations associated with respective timestamps different from the first timestamp.

By determining an absolute position of the portable electronic device based at least in part on the graphical representations using a neural network comprising one or more convolutional layers and a multichannel input to the one or more convolutional layers, an improved method of determining an absolute position of the portable electronic device in an accurate manner is provided.

In step 850, a trajectory of the sensor is determined based on the determined position of the sensor and a previously determined position of the sensor.

The Magnetic Positioning Indoor Estimation (MagPIE) dataset is a dataset for the evaluation of indoor positioning algorithms that use magnetic anomalies. The dataset contains IMU (inertial measurement unit) and magnetometer measurements along with ground truth position measurements that have centimeter accuracy. The data was collected in three different buildings on the UIUC campus: the Coordinated Sciences Laboratory (CSL), the Talbot Laboratory, and the Loomis Laboratory. The dataset comprises data points of a walking person (WLK) with a handheld phone (as if one was texting) and of a UGV (unmanned ground vehicles). Two different testing scenarios are available: one without any imposed changes to the magnetic field of the building (Outlier Free) and a second set with objects (With Outliers) added to the scene that change the magnetic field of the building.

According to an embodiment, the method of predicting an absolute position of a portable electronic device from magnetic field data may comprise a mobile phone-based localization method comprising determining a position of a user and/or the mobile phone by analyzing mobile phone sensor data at any time. As the floor of a building is often accurately detected from pressure sensor data, a 3D localization problem can be reduced to a simpler, 2D localization problem, where the user's position is described by two values $pos_x$ and $pos_y$.

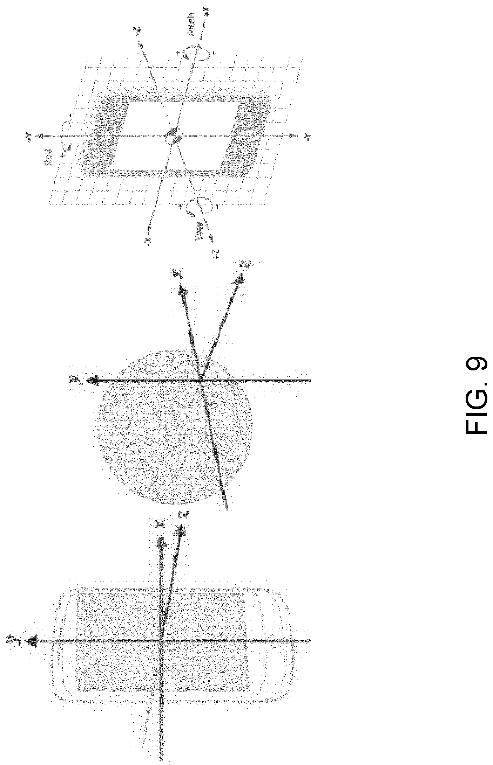

In a mobile phone, accelerometer, gyroscope, and magnetometer provide their data in a local reference frame. Accelerometer and gyroscope sensors can be used to convert magnetic sensor values from local to a global reference frame (see **Figure 9**). In the following it can be assumed that the magnetic field data does not depend on the phone's orientation in space. The phone's orientation in space refers to the global reference frame, and thus forms a multivariate time series consisting of three values ($m_x$, $m_y$, $m_z$) at timestamp $t$. Training and testing datasets may consist of sets of trials. Any training trial may include magnetic field data and ground truth positions: $D_{train} = (t, m_x, m_y, m_z, pos_x, pos_y)$, where $t$ is the measurement timestamp. For a testing trial, the ground truth positions may be unavailable, $D_{test} = (t, m_x, m_y, m_z)$. The dataset includes a set of single pedestrian trials through a building. Trials can be collected on different days and in different parts of the building.

Mobile phone sensors are generally not synchronized; they capture data at different timestamps and different frequencies. As for any further processing, the sensor readings may be synchronized and aligned at the same timestamps.

Build-in magnetometers are low cost sensors and their measurements of the magnetic field are often corrupted by errors including sensor fabrication issues and the magnetic deviations induced by the platform and environment. Therefore, the magnetometer may be calibrated prior to the measurement to achieve high accuracy.

Magnetic deviations may be caused by ferromagnetic elements present in the surroundings of the magnetometer. The magnetic deviations may be composed of a permanent magnetism and an induced one. The first one is called the hard iron effect whereas the second is the soft iron effect. Hard iron effects result from permanent magnets and magnetic hysteresis, that is, remanence of magnetized iron materials and is equivalent to a bias vector $b_m$. Soft iron effects result from the interaction of ferromagnetic elements with an external field, which induces magnetism. This changes the intensity as well as the direction of the sensed field. The soft iron effect can be modeled as a $3 \times 3$ matrix $\Lambda$.

An ideal three-axis magnetometer measures a magnetic field strength along orthogonal axes related to the phone. In the absence of any magnetic interference, magnetometer readings measure the Earth's magnetic field. If magnetometer measurements are taken when the sensor is rotated through all possible orientations, the measurements should lie on a 3D sphere. The radius of the sphere is the magnetic field strength. The magnetometer can be calibrated by estimating $b_m$ and $\Lambda$ from raw magnetic data. Once $b_m$ and $\Lambda$ are found, the calibrated data will be obtained by applying $m_c = \Lambda(m_{raw} - b_m)$.

The orientation of the phone in the space can be described by quaternions or rotation angles (yaw, pitch, roll), see **Figure 9.** Quaternions can be converted to three rotation angles. These rotation angles can be obtained directly from the phone or reconstructed from the gyroscope readings. While moving, a person can hold the phone in various positions (upward in front of him/her, near the ear, in a pocket, etc.). Even during a short time, the position of the phone can change significantly. As the phone's sensors provide their measurements in the local reference frame, rotation angles can be used to convert them to a global reference frame.

In embodiments, magnetic-field based localization is implemented using deep neural networks (DNNs), e.g. for forming graphical representations of magnetic field data in block 246 of system 200 of Figure 2. A DNN learning process may comprise of an objective function optimization and network weights update though gradient back-propagation. A model, such as a neural network, may comprise a regression model or a classification model. When training regression models, the Mean Square Error (MSE), Mean Absolute Error (MAE), and Huber loss can be used as the objective minimization function. Classification models can be trained with the cross-entropy loss.

The magnetic field values in a single trial represent a multivariate time series. Each observation may consist of 3 values ($m_x$, $m_y$, $m_z$). The axes $x$, $y$ and $z$ do not need to be orthogonal. Some orientations in the magnetic field may be more important than others. For example, different combinations and projections, such as $m_{xy} = \sqrt{m_x^2 + m_y^2}$ and $m_{xyz} = \sqrt{m_x^2 + m_y^2 + m_z^2}$, can be calculated based on the magnetic field values. The choice of optimal projections of magnetic field values may be one of the model hyper-parameter.

Initially, the sensor data may be pre-processed (e.g., for sensors 242 at 244 in Figure 2). Once the projections of the magnetic field values are obtained after the pre-processing, they can be input into the DNN. For example, the feature generation step for a one-dimensional time series $V = \{v_1, v_2, ..., v_n\}$ may comprise applying a sliding window approach. For example, a plurality of subsets may be selected form the time series based on a window size and an overlap. For example, the windows size may be 5 - 10 seconds and the overlap of the windows may be between 20 and 1 percent, e.g. 10, 5 or 2 percent. For every subset of data points or magnetic field values a nonlinear transformation from 1D time series to 2D images may be applied to transform the magnetic field patterns into graphical representations. For example, convolutional neural networks can be used to analyze sequential values transformed into recurrence plots (RPs). As RPs address one specific type of recurrence in time series, PRs can be extended with other methods for encoding time series into graphical representations, e.g. 2D visual patterns. Other methods may be, for example, Gramian Angular Summation/Difference Fields (GASF/GADF) and Markov Transition Fields (MTF).

These four nonlinear 1D-to-2D transformations are described in more detail below.

Recurrence plots (RPs) have been previously proposed for different time series and applications. For the magnetic field data, RPs can be calculated for the Euclidean metric as follow:

$$d_{ij} = \left\| v_i - v_j \right\| \ \forall i, j \in 1 \dots n$$

$$RP_{ij} = 1 - \frac{d_{ij}}{\max(d)}$$

The method can be extended to any pairwise distance metrics, such as Minkowski or Manhattan metrics.

In the Gramian Angular Field (GAF), time series can be represented in a polar coordinate system instead of the Cartesian coordinates. Time series values can be rescaled so that all values fall in the interval [-1, 1] in order to be represented as polar coordinates.

$$\tilde{v}_i = \frac{(v_i - \max(V)) + (v_i - \min(V))}{\max(V) - \min(V)}$$

$$\theta_i = \arccos(\tilde{v}_i), \qquad -1 \leq \tilde{v}_i \leq 1, \qquad \tilde{v}_i \in \tilde{V}$$

The polar-encoded time series vector is then transformed into a matrix. If the length of the time series vector is $n$, then the transformed matrix is of shape ($n \times n$). The GAF may comprise one of two variants of GAF: Gramian Angular Summation Field (GASF) and Gramian Angular Difference Field (GADF), as follows

$$GASF_{ij} = \cos(\theta_i + \theta_j),$$

$$GADF_{ij} = \sin(\theta_i - \theta_j)$$

The main idea of the Markov Transition Field (MTF) is to consider time series as an outcome of a Markov process. The method builds the Markov matrix of quantile bins after discretization and encodes the dynamic transition probability in a quasi-Gramian matrix.

For the time series $V$, $Q$ quantile bins can be identified and each $v_i$ can be assigned to the corresponding bins $q_j, j \in [1, Q]$. A $Q \times Q$ weighted adjacency matrix $W$ can be constructed by counting transitions among quantile bins in the manner of a first-order Markov chain along the time axis, as follows:

$$MTF = \begin{bmatrix} W_{ij|v_1 \in q_i, v_1 \in q_j} & \cdots & W_{ij|v_1 \in q_i, v_n \in q_j} \\ \vdots & \ddots & \vdots \\ W_{ij|v_n \in q_i, v_1 \in q_j} & \cdots & W_{ij|v_n \in q_i, v_n \in q_j} \end{bmatrix}$$

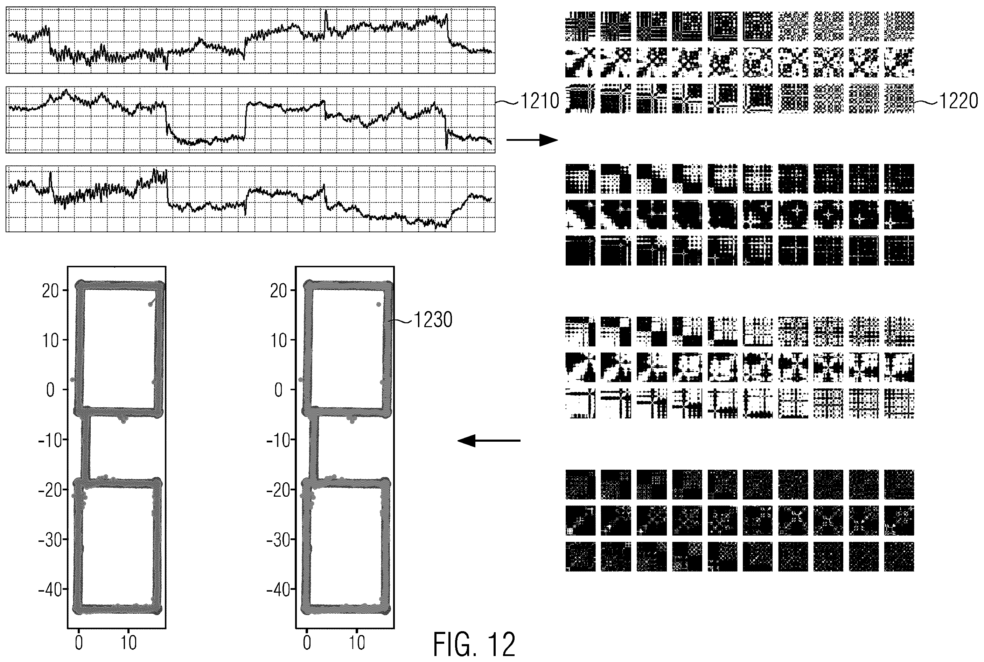

The four transformations presented above can be visualized by using one trial (CSL Training Trial N 11) from the MagPie dataset with a window size of 7 seconds, a window step size of 1 s, an image size 100 and "canberra" distance metrics. **Figure 12** shows the magnetic field time series 1210 in the global coordinate system for the trial.

**Figure 12** show the results of transforming the time series in 2D patterns 1220 (top three rows, sequence of ten recurrence plots for three dimensions x, y, z; second three rows from top, ten consecutive Gramian Angular Summation Field plots for three dimensions x, y, z; third three rows from top, ten consecutive Gramian Angular Difference Field plots for three dimensions x, y, z; last three rows, ten consecutive Markov Transition Field plots for three dimensions x, y, z) using RP, GASF, GADF and MTF methods presented above. All the images are generated on a segment from 7 to 24 seconds from the magnetic field time series 1210. Images are built for original magnetic values ($m_x$, $m_y$, $m_z$) separately.

In the following part of the description, three different neural networks according to embodiments for predicting an absolute position of a portable electronic device based on magnetic field data are discussed. In embodiments of system 200 described above, neural network 248 may be configured according to these neural networks.

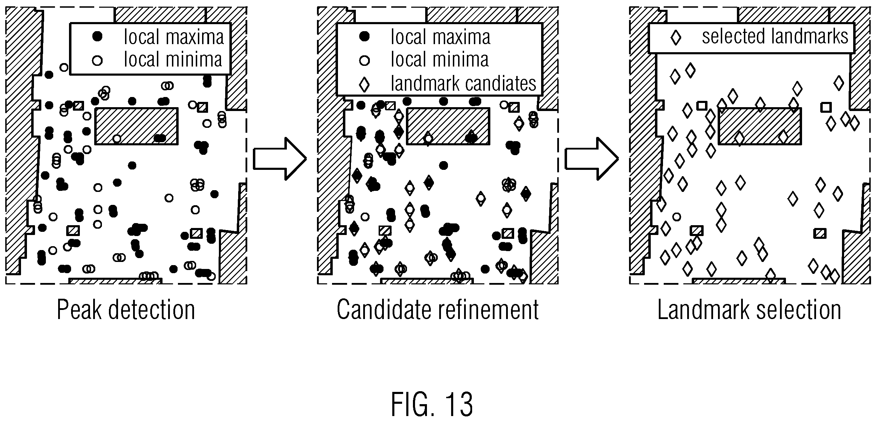

The first neural network will be called a landmark-based classification model. For this model, magnetic maps are constructed, which comprises detecting magnetic landmarks. The model is trained to classify a correct position as one of the landmarks. In more detail, a magnetic grid map is constructed by interpolating magnetic data. Then, a smoothing process may correct errors caused by a sensor reading offset. Landmark detection may comprise local minima/maxima (peaks) detection, magnetic landmark candidate refinement (to remove outliers), and magnetic landmark selection as shown in **Figure 13.**

Magnetic landmarks may be ferromagnetic objects that have larger or smaller magnetic intensities than their surroundings. Therefore, magnetic landmark candidates can be identified by finding the local minima/maxima in a magnetic map.

Not all points can be used as magnetic landmarks for positioning. Outliers exist among these points depending on the indoor geomagnetic environment and magnetic landmark characteristics. In some areas, magnetic intensity rarely changes. Furthermore, the magnetic intensities of some magnetic landmarks fluctuate over time. Fluctuations can be caused by electromagnetic elements, such as electric motors. Such fluctuations may generate clusters of local minima/maxima. Magnetic landmark candidate refinement helps to solve the problem. A Euclidean distance-based hierarchical tree can be used to group these points as one magnetic landmark candidate.

Most of the landmark candidates have much higher or lower values than the mean magnetic intensity. However, the magnetic intensity of some candidates is similar to the average intensities, so no magnetic sequence pattern is created. Thresholds can be defined or set to automatically identify these candidates and to filter them. The thresholds may be set manually.

Once the magnetic landmarks are selected or determined, the localization task may be reduced to identifying the closest landmark. A classifier can be used to determine the closest landmark.

The model input can be a $N$-channel tensor. For example, $N$ can be 12 with 3 channels for each of RP, GASF, GADF, and MTF. The classification architecture may comprise two convolutional layers that extract position embeddings, and two fully connected layers for classification. For example, for the CSL building 30 magnetic landmarks can be determined. Therefore, the output layer may have 30 neurons (**Figure 10A**). The Loss function may be the cross-entropy loss.

For the second neural network, which will be called CNN+FC regression model, the landmark-based classification is replaced with a direct absolute position regression. The CNN+FC regression model replicates the landmark classification architecture but the output layer may have only 2 neurons - for the x- and y- position ($pos_x$ and $pos_y$). Alternatively, the output layer may have 3 neurons for the x-, y- and z- position. For the objective minimization function MSE, MAE or Huber loss may be used. The CNN+FC regression makes the system independent of the magnetic field map quality and the selected landmarks. However, the landmark-based and the CNN-based regression model fail when facing similar magnetic patterns in different locations.

In an embodiment, the navigation context is taken into account to disambiguate the similar magnetic patterns in different locations. The third neural network will be called CNN+RNN regression model. For this model, the FC layers are replaced with recurrent layers. Recurrent neural networks (RNNs) can be used for working with sequential, regular timestamp-based data. The training protocol may be changed for an RNN and data may be processed in a trial-by-trial manner and not a point-by-point manner. For each track, the position estimations $pos_{x_{1...t}}$, $pos_{y_{1...t}}$ are generated sequentially, where the previous estimations play a role in predicting the next position, $pos_{x_{t+1}}$, $pos_{y_{t+1}}$.

The CNN+RNN regression model may comprise a multi-channel CNN+RNN deep regression model. CNN+RNN regression model preserves convolutional layers to extract position embeddings but replaces FC layers with recurrent layers. **Figure 10B** shows the architecture of CNN+RNN regression model according to an embodiment. The CNN+RNN regression model comprises a convolutional neural network with one or more convolutional layers and a recurrent neural network with at least one recurrent layer, such as a 2-layer one-directional RNN on GRU cells.

The RNN may accept input sequences of varying lengths. The model may start by making a prediction of a location based on a first graphical representation of the magnetic field data associated with a first timestamp. Subsequently, the model may predict a next location based on the first graphical representation and a second graphical representation of the magnetic field data associated with a second timestamp. A next location may be predicted based on at least some graphical representations associated with respective previous timestamps or previously determined locations. Alternatively, other indoor positioning systems may be used to determine earlier locations that can then be used to predict a next location of a sensor or user. A maximum number of previously determined locations or previously created graphical representations for the RNN layers may be predefined or set by a user. As a result, the model can use the sequence of all the previously determined locations or previously created graphical representations or maximum number of 10-20 previously determined locations or previously created graphical representations for the next prediction.

Alternative sensors and localization systems can be used to determine the first position or location, for example, from Wi-Fi or Bluetooth signals. As the average distance error of Wi-Fi-based localization is 2-3 meters, this error can be simulated in both training and testing phase, by adding a random noise to the starting point position.

All models have been evaluated on the MagPie dataset. The three buildings, CSL, Loomis, and Talbot, have different layouts and different complexity of localization. In addition to training and test datasets, a validation dataset is used for early stopping (to stop training when the neural network starts to overfit). The CNN+FC regression models show a good result for the CSL building. The best results for all buildings, all three models and 1, 3, 9, 12 channels are presented in Table 1. The CNN+FC Landmark-based classification model uses landmarks for classification, which confirmed that buildings differ greatly in their magnetic anomalies. Good results have been obtained only for CSL. CNN+RNN Deep Regression takes the trajectory context into account, which helps solving the pattern ambiguity problem and allows reducing considerably the localization error. The predictions by CNN+RNN models results for a building are shown by reference sign 1230 in **Figures 12.**

**Table 2** summarizes the performance of the three methods for the three buildings. Additionally, the table reports localization errors when the number of channels vary 1 (x for RP), 3 (x,y,z for RP) 9 (x,y,z for RP, GASF and GADF) or 12 (z,y,z for all methods). Results clearly show that using multiple channels greatly contribute to the final low error.

**Table 2**: Localization error [m] of the deep regression and landmark classification methods for 1, 3, 9 and 12 channels.

| Building | N channels | CNN+FC Landmarks | CNN+FC Regression | CNN+RNN Regression |
|---|---|---|---|---|
| CSL | 1 | 5.15 | 5.09 | 5.80 |
| | 3 | 2.16 | 1.47 | 4.61 |
| | 9 | 1.16 | 0.97 | 0.81 |
| | 12 | 0.95 | 0.98 | **0.30** |
| Loomis | 1 | 8.13 | 8.50 | 7.36 |
| | 3 | 6.62 | 6.72 | 2.51 |
| | 9 | 5.77 | 6.16 | 1.15 |
| | 12 | 4.62 | 5.05 | **1.07** |
| Talbot | 1 | 9.27 | 11.32 | 6.91 |
| | 3 | 6.79 | 6.91 | 4.04 |
| | 9 | 4.95 | 4.90 | 1.17 |
| | 12 | 4.49 | 4.72 | **1.06** |

For all models, the starting point estimation may be noisy for both training and test trials. The noise may be simulated as the normal distribution with the mean of 0 m and variance of 3 m. The model may be trained in accordance with hyper-parameters. Hyper-parameters may include the number of RNN layers, the pairwise distance metric, the number of starting points, the starting point noise and the teacher forcing probability.

Embodiments of the present application provide for multiple improvements for predicting absolute positions based on magnetic field data, including converting magnetic field time series into 2D representation to enable using CNN-based models, processing the localization as deep regression of user's position without landmarks and enabling algorithms to bootstrap.

Embodiments address the problem caused by magnetic pattern ambiguity, by taking into account entire trajectories of a sensor or user, which represents the trial context, and using a neural network comprising CNN layers followed by RNN layers. The ambiguity of the magnetic field patterns fools the CNN+FN models, which faces a hard task of distinguishing between magnetic patterns, which are very similar but located in very different places of a building. Instead, recurrent models take into account the context of trajectories of a sensor and/or a user as inner RNN states. This helps disambiguate the pattern locations by considering the navigational content, given by the recurrent model's previous states. Development of the pipeline and evaluation can be done offline. While all the proposed methods do require time (and memory) for training accurate models, they can run online in the testing phase, because they feed forward the network with already observed data.

One issue when using RNNs may be the delay for the first points in trajectories. To overcome this problem, models with a smaller window size or models that determine fewer points in the trajectory for the next point may be used, and after the main model collects the necessary data for a prediction, the small model can be switched off.

Another issue with RNNs is the requirement to know the starting point of the trajectory at test time and the need to accumulate data for the starting N seconds. As a solution to this bootstrapping problem, RNNs can use estimations of the first points from other sensor data (floor estimation from pressure sensor and localization estimation from Wi-Fi signals, for example).

While some specific embodiments have been described in detail above, it will be apparent to those skilled in the art that various modifications, variations, and improvements of the embodiments may be made in light of the above teachings and within the content of the appended claims without departing from the intended scope of the embodiments. In addition, those areas in which it is believed that those of ordinary skill in the art are familiar have not been described herein in order to not unnecessarily obscure the embodiments described herein. Accordingly, it is to be understood that the embodiments are not to be limited by the specific illustrative embodiments, but only by the scope of the appended claims.

Although the above embodiments have been described in the context of method steps, they also represent a description of a corresponding component, module or feature of a corresponding apparatus or system.

Some or all of the method steps may be implemented by a computer in that they are executed by (or using) a processor, a microprocessor, an electronic circuit or processing circuitry.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system.

Generally, embodiments can be implemented as a computer program product with a program code or computer-executable instructions, the program code or computer-executable instructions being operative for performing one of the methods when the computer program product runs on a computer. The program code or the computer-executable instructions may be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor. In a further embodiment, an apparatus comprises one or more processors and the storage medium mentioned above.

In a further embodiment, an apparatus comprises means, for example processing circuitry like, e.g., a processor communicating with a memory, the means being configured to, or adapted to perform one of the methods described herein.

A further embodiment comprises a computer having installed thereon the computer program or instructions for performing one of the methods described herein.

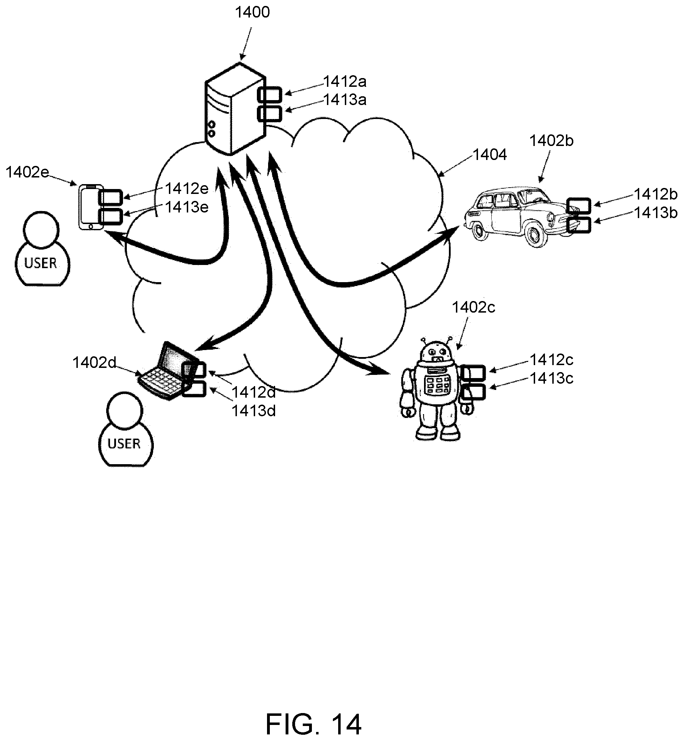

The above-mentioned methods and embodiments may be implemented within an architecture such as illustrated in **FIG 14**, which comprises server 1400 and one or more client devices 1402 that communicate over a network 1404 (which may be wireless and / or wired) such as the Internet for data exchange. Server 1400 and the client devices 1402 include a data processor 1412 and memory 1413 such as a hard disk. The client devices 1402 may be any device that communicates with server 1400, including autonomous vehicle 1402b, robot 1402c, computer 1402d, or cell phone 1402e.

More precisely in an embodiment, the methods according to the embodiment of **Figures 1, 6, or 8** may be performed at server 1400. In other embodiments, the methods according to the embodiments of **Figures 1, 6, or 8** may be performed at client device 1402 partially or completely. In yet other embodiments, the methods may be performed at a different server or on a plurality of servers in a distributed manner.

**Claims**

1. A computer-implemented method of predicting a position of a portable electronic device in an indoor environment from sensor data, the computer-implemented method comprising:

   generating (110) at least one absolute position prediction of a portable electronic device, wherein generating each absolute position prediction is based on radio signal data of the portable electronic device, wherein generating the at least one absolute position prediction is repeated at a first rate;
   generating (120) a displacement prediction of the portable electronic device, wherein generating the displacement prediction comprises generating, by a neural network (248), the displacement prediction based on inertial sensor data of the portable electronic device, wherein generating the displacement prediction is repeated at a second rate which is different from the first rate, wherein the neural network (248) comprises feed-forward networks (318) for displacement regression and a feed-forward network (314) for predicting an activity, wherein the predicted activity is employed to correct the displacement regression to generate the displacement prediction;
   determining (130) a predicted position by updating a previously predicted position with at least one of the displacement prediction and the at least one absolute position prediction.

2. The computer-implemented method of claim 1, wherein generating the displacement prediction from the inertial sensor data comprises converting the inertial sensor data to a graphical representation, and wherein the neural network comprises at least one of a convolutional neural network, a bidirectional recurrent neural network and a neural network comprising an attention layer.

3. The computer-implemented method of one of claims 1 to 2, wherein generating the at least one absolute position prediction comprises employing a trained variational autoencoder (224) to generate the absolute position prediction from the radio signal data.

4. A computer-implemented method of training a machine learning system for predicting a position from sensor data of a portable electronic device, the computer-implemented method comprising:

   training (610) a motion classifier with a subset of sensor training data to learn identifying a user activity, wherein the training data comprises inertial sensor data that has been captured by a user carrying the portable electronic device along a trajectory;
   training (620) a landmark classifier for detection of landmarks from the sensor training data;
   generating (630) pseudo-labels for annotating the sensor training data, wherein generating the pseudo-labels comprises employing a user activity identified by the motion classifier and landmark positions identified by the landmark classifier, wherein generating the pseudo-labels comprises, when the user activity identified by the motion classifier indicates that the user was in motion, interpolating positions between two landmark positions; and
   training (640) a neural network with the annotated training data.

5. The computer-implemented method of claim 4, wherein training (620) the landmark classifier comprises estimating orientation vectors from the inertial sensor data and employing a change in the orientation vectors as indicating a landmark position.

6. The computer-implemented method of one of claims 1 to 3, the method further comprising:

   creating (830) graphical representations based on magnetic field data of a sensor (242) of the portable electronic device, wherein the magnetic field data comprises a time series of magnetic field values; and
   determining (840) a further absolute position prediction of the portable electronic device based at least in part on the graphical representations using a neural network,
   wherein the neural network comprises one or more convolutional layers, and wherein the neural network comprises a multichannel input to the one or more convolutional layers,
   wherein the determining (130) a predicted position by updating a previously predicted position with at least one of the displacement prediction and the at least one absolute position prediction comprises updating a previously predicted position with the displacement prediction and the further absolute position prediction.

7. The computer-implemented method of claim 6, wherein the creating graphical representations (830) based on magnetic field data comprises:

selecting a subset of magnetic field values of the time series of magnetic field values, and
transforming the subset of magnetic field values or a projection of the subset of magnetic field values into one or more two-dimensional images.

8. The computer-implemented method of claim 6 or claim 7, wherein the graphical representations comprise at least one of a recurrence plot, RP, a Gramian Angular Summation Field, GASF, a Gramian Angular Difference Field, GADF, and a Markov Transition Field, MTF.

9. The computer-implemented method of one of claims 6 to 8, wherein the neural network comprises one or more recurrent layers, and wherein the one or more recurrent layers follow the one or more convolutional layers.

10. The computer-implemented method of one of claims 6 to 9,
wherein a first graphical representation, created in accordance with a first method, and a second graphical representation, created in accordance with a second method different from the first method, are inputted simultaneously in the multichannel input to the one or more convolutional layers, wherein the first graphical representation and the second graphical representation are obtained from a same set of magnetic field value.

11. The computer-implemented method of one of claims 6 to 10, wherein the neural network is initialized with one or more starting positions obtained from a positioning system.

12. The computer-implemented method of one of claims 6 to 11, wherein the neural network is trained based on characteristics of the earth magnetic field in a building to determine the position of the sensor in the building.

13. The computer-implemented method of one of claims 6 to 12, wherein the determining (840) an absolute position of the portable electronic device comprises inputting, in the neural network, a set of visual representations, associated with a first timestamp, of the visual representations and at least one of:

(i) one or more previously determined positions,
(ii) previously determined feature vectors, and
(iii) one or more sets of visual representations associated with respective timestamps different from the first timestamp, and/or

wherein the method further comprises generating, by the sensor, the magnetic field data.

14. An apparatus (400, 402) comprising one or more processors (412), the one or more processors (412) being configured to perform the method (100) of one of claims 1 to 13.

15. One or more computer-readable storage media (413) having computer-executable instructions stored thereon, which, when executed by one or more processors (412) perform the method (100) of one of claims 1 to 13.

**Patentansprüche**

1. Computergestütztes Verfahren zur Vorhersage der Position eines tragbaren elektronischen Geräts in einer Innenumgebung anhand von Sensordaten, wobei das computergestützte Verfahren umfasst:

Erzeugen (110) mindestens einer Vorhersage einer Absolutposition eines tragbaren elektronischen Geräts, wobei das Erzeugen jeder Vorhersage einer Absolutposition auf Funksignaldaten des tragbaren elektronischen Geräts basiert, wobei das Erzeugen der mindestens einen Vorhersage einer Absolutposition mit einer ersten Rate wiederholt wird;
Erzeugen (120) einer Vorhersage einer Verschiebung des tragbaren elektronischen Geräts, wobei das Erzeugen der Vorhersage einer Verschiebung das Erzeugen der Vorhersage einer Verschiebung durch ein neuronales Netzwerk (248) auf Basis von Trägheitssensordaten des tragbaren elektronischen Geräts beinhaltet, wobei das Erzeugen der Vorhersage einer Verschiebung mit einer zweiten Rate wiederholt wird, die sich von der ersten Rate unterscheidet, wobei das neuronale Netzwerk (248) ein Vorwärtskopplungs-Netzwerke (318) für Verschiebungsregression und ein Vorwärtskopplungs-Netzwerk (314) zum Vorhersagen einer Aktivität enthält, wobei die vorhergesagte Aktivität zur Korrektur der Verschiebungsregression verwendet wird, um die Vorhersage einer Verschiebung zu erzeugen;

Bestimmen (130) einer vorhergesagten Position durch Aktualisieren einer zuvor vorhergesagten Position mit der Vorhersage einer Verschiebung und/oder der mindestens einen Vorhersage einer Absolutposition.

2. Computerimplementiertes Verfahren nach Anspruch 1, wobei das Erzeugen der Vorhersage einer Verschiebung aus den Trägheitssensordaten Umwandeln der Trägheitssensordaten in eine grafische Darstellung beinhaltet, und wobei das neuronale Netzwerk ein Faltungsneuronales Netzwerk und/oder ein bidirektionales rekurrentes neuronales Netzwerk und/oder ein neuronales Netzwerk beinhaltet, das eine Aufmerksamkeitsschicht hat.

3. Computerimplementiertes Verfahren nach Anspruch 1 oder 2, wobei das Erzeugen der mindestens einen Vorhersage einer Absolutposition Verwenden eines trainierten Variations-Auto-Codierers (224) zum Erzeugen der Vorhersage einer Absolutposition aus den Funksignaldaten umfasst.

4. Computerimplementiertes Verfahren zum Trainieren eines maschinellen Lernsystems zum Vorhersagen einer Position aus Sensordaten eines tragbaren elektronischen Geräts, wobei das computerimplementierte Verfahren umfasst:

Trainieren (610) eines Bewegungsklassifizierers mit einer Teilmenge von Sensortrainingsdaten, um das Identifizieren einer Benutzeraktivität zu lernen, wobei die Trainingsdaten Trägheitssensordaten enthalten, die von einem Benutzer erfasst wurden, der das tragbare elektronische Gerät entlang einer Trajektorie trägt;

Trainieren (620) eines Orientierungsklassifizierers zum Erkennen von Orientierungspunkten aus den Sensortrainingsdaten;

Erzeugen (630) von Pseudobezeichnungen zum Annotieren der Sensortrainingsdaten, wobei das Erzeugen der Pseudobezeichnungen Verwenden einer von dem Bewegungsklassifizierer identifizierten Benutzeraktivität und von dem Orientierungsklassifizierer identifizierte Orientierungspunktpositionen umfasst, wobei das Erzeugen der Pseudobezeichnungen umfasst, dass, wenn die von dem Bewegungsklassifizierer identifizierte Benutzeraktivität anzeigt, dass sich der Benutzer in Bewegung befand, Positionen zwischen zwei Orientierungspunktpositionen interpoliert werden; und

Trainieren (640) eines neuronalen Netzwerks mit den annotierten Trainingsdaten.

5. Computerimplementiertes Verfahren nach Anspruch 4, wobei das Trainieren (620) des Orientierungsklassifizierers Schätzen von Orientierungsvektoren aus den Trägheitssensordaten und Verwenden einer Änderung der Orientierungsvektoren als Angabe einer Orientierungspunktposition umfasst.

6. Computerimplementiertes Verfahren nach einem der Ansprüche 1 bis 3, wobei das Verfahren ferner umfasst:

Erstellen (830) grafischer Darstellungen auf der Grundlage von Magnetfelddaten eines Sensors (242) des tragbaren elektronischen Geräts, wobei die Magnetfelddaten eine Zeitreihe von Magnetfeldwerten enthalten; und

Bestimmen (840), unter Verwendung eines neuronalen Netzwerks, einer weiteren Vorhersage einer Absolutposition des tragbaren elektronischen Geräts zumindest teilweise auf Basis der grafischen Darstellungen, wobei das neuronale Netzwerk eine oder mehrere Faltungsschichten aufweist und wobei das neuronale Netzwerk einen Mehrkanaleingang zu der einen oder den mehreren Faltungsschichten aufweist, wobei das Bestimmen (130) einer vorhergesagten Position durch Aktualisieren einer zuvor vorhergesagten Position mit der Vorhersage einer Verschiebung und/oder der mindestens einen Vorhersage einer Absolutposition Aktualisieren einer zuvor vorhergesagten Position mit der Vorhersage einer Verschiebung und der weiteren Vorhersage einer Absolutposition umfasst.

7. Computerimplementiertes Verfahren nach Anspruch 6, wobei das Erstellen grafischer Darstellungen (830) auf der Grundlage von Magnetfelddaten umfasst:

Auswählen einer Teilmenge von Magnetfeldwerten der Zeitreihe von Magnetfeldwerten und Transformieren der Teilmenge von Magnetfeldwerten oder einer Projektion der Teilmenge von Magnetfeldwerten in ein oder mehrere zweidimensionale Bilder.

8. Computerimplementiertes Verfahren nach Anspruch 6 oder Anspruch 7, wobei die grafischen Darstellungen ein Rekursionsdiagramm, RP, und/oder ein Gramsches Winkel-Summationsfeld, GASF, und/oder ein Gramsches Winkel-Differenzfeld, GADF, und/oder ein Markov-Transitionsfeld, MTF, umfassen.

9. Computerimplementiertes Verfahren nach einem der Ansprüche 6 bis 8, wobei das neuronale Netzwerk eine oder mehrere rekurrente Schichten hat und wobei die eine oder mehreren rekurrenten Schichten auf die eine oder die mehreren Faltungsschichten folgen.

10. Computerimplementiertes Verfahren nach einem der Ansprüche 6 bis 9,
wobei eine erste grafische Darstellung, die gemäß einem ersten Verfahren erstellt wurde, und eine zweite grafische Darstellung, die gemäß einem zweiten Verfahren erstellt wurde, das sich von dem ersten Verfahren unterscheidet, gleichzeitig in den Mehrkanaleingang der einen oder der mehreren Faltungsschichten eingegeben werden, wobei die erste grafische Darstellung und die zweite grafische Darstellung aus derselben Menge von Magnetfeldwerten erhalten werden.

11. Computerimplementiertes Verfahren nach einem der Ansprüche 6 bis 10, wobei das neuronale Netzwerk mit einer oder mehreren Startpositionen initialisiert wird, die von einem Positionierungssystem erhalten werden.

12. Computerimplementiertes Verfahren nach einem der Ansprüche 6 bis 11, wobei das neuronale Netzwerk auf der Grundlage von Eigenschaften des Erdmagnetfelds in einem Gebäude trainiert wird, um die Position des Sensors in dem Gebäude zu bestimmen.

13. Computerimplementiertes Verfahren nach einem der Ansprüche 6 bis 12, wobei das Bestimmen (840) einer Absolutposition des tragbaren elektronischen Geräts Eingeben, in das neuronale Netzwerk, einer Gruppe visueller Darstellungen, die einem ersten Zeitstempel zugeordnet sind, und:

(i) einer oder mehrerer zuvor bestimmter Positionen, und/oder
(ii) zuvor bestimmter Merkmalsvektoren, und/oder
(iii) einer oder mehrerer Gruppen visueller Darstellungen, die jeweiligen Zeitstempeln zugeordnet sind, die sich von dem ersten Zeitstempel unterscheiden,
und/oder

wobei das Verfahren ferner Erzeugen der Magnetfelddaten durch den Sensor umfasst.

14. Vorrichtung (400, 402) mit einem oder mehreren Prozessoren (412), wobei der eine oder die mehreren Prozessoren (412) ausgebildet sind, das Verfahren ( 100) nach einem der Ansprüche 1 bis 13 auszuführen.

15. Ein oder mehrere computerlesbare Speichermedien (413) mit darauf gespeicherten computerausführbaren Anweisungen, die, wenn sie von einem oder mehreren Prozessoren (412) ausgeführt werden, das Verfahren (100) gemäß einem der Ansprüche 1 bis 13 ausführen.

**Revendications**

1. Procédé mis en œuvre par ordinateur consistant à prédire une position d'un dispositif électronique portable dans un environnement intérieur à partir de données de capteur, le procédé mis en œuvre par ordinateur comportant :

la génération (110) d'au moins une prédiction de position absolue d'un dispositif électronique portable, où la génération de chaque prédiction de position absolue est fondée sur des données de signal radio du dispositif électronique portable, où la génération de l'au moins une prédiction de position absolue est répétée selon une première cadence ;
la génération (120) d'une prédiction de déplacement du dispositif électronique portable, où la génération de la prédiction de déplacement comporte la génération, par un réseau neuronal (248), de la prédiction de déplacement sur la base de données de capteur inertiel du dispositif électronique portable, où la génération de la prédiction de déplacement est répétée à une seconde cadence qui est différente de la première cadence, où le réseau neuronal (248) comporte des réseaux à propagation avant (318) pour la régression de déplacements et un réseau à action directe (314) pour la prédiction d'une activité, où l'activité prédite est employée pour corriger la régression de déplacements afin de générer la prédiction de déplacement ;
la détermination (130) d'une position prédite en mettant à jour une position prédite précédemment avec au moins l'une parmi la prédiction de déplacement et l'au moins une prédiction de position absolue.

2. Procédé mis en œuvre par ordinateur de la revendication 1, où la génération de la prédiction de déplacement à partir des données de capteur inertiel comporte la conversion des données de capteur inertiel en une représentation graphique, et où le réseau neuronal comporte au moins un réseau parmi un réseau neuronal convolutif, un réseau neuronal récurrent bidirectionnel et un réseau neuronal comportant une couche d'attention.

3. Procédé mis en œuvre par ordinateur de l'une des revendications 1 à 2, où la génération de l'au moins une prédiction de position absolue comporte l'emploi d'un auto-encodeur variationnel entraîné (224) pour générer la prédiction de position absolue à partir des données de signal radio.

4. Procédé mis en œuvre par ordinateur consistant à entraîner un système d'apprentissage automatique pour prédire une position à partir de données de capteur d'un dispositif électronique portable, le procédé mis en œuvre par ordinateur comportant :

l'entraînement (610) d'un classificateur de mouvement avec un sous-ensemble de données d'entraînement de capteur pour apprendre à identifier une activité d'utilisateur, où les données d'entraînement comportent des données de capteur inertiel qui ont été capturées par un utilisateur portant le dispositif électronique portable le long d'une trajectoire ;
l'entraînement (620) d'un classificateur de points de repère pour la détection de points de repère à partir des données d'entraînement de capteur ;
la génération (630) de pseudo-étiquettes pour annoter les données d'entraînement de capteur, où la génération des pseudo-étiquettes comporte l'emploi d'une activité d'utilisateur identifiée par le classificateur de mouvement et de positions de points de repère identifiés par le classificateur de points de repère, où la génération des pseudo-étiquettes comporte, lorsque l'activité d'utilisateur identifiée par le classificateur de mouvement indique que l'utilisateur était en mouvement, l'interpolation de positions entre deux positions de points de repère ; et
l'entraînement (640) d'un réseau neuronal avec les données d'entraînement annotées.

5. Procédé mis en œuvre par ordinateur de la revendication 4, où l'entraînement (620) du classificateur de points de repères comporte l'estimation de vecteurs d'orientation à partir des données de capteur inertiel et l'emploi d'un changement dans les vecteurs d'orientation comme indication d'une position de point de repère.

6. Procédé mis en œuvre par ordinateur de l'une des revendications 1 à 3, le procédé comportant en outre :

la création (830) de représentations graphiques sur la base de données de champ magnétique d'un capteur (242) du dispositif électronique portable, où les données de champ magnétique comportent une série temporelle de valeurs de champ magnétique ; et
la détermination (840) d'une prédiction de position absolue supplémentaire du dispositif électronique portable au moins en partie sur la base des représentations graphiques en utilisant un réseau neuronal,
où le réseau neuronal comporte une ou plusieurs couches convolutives, et où le réseau neuronal comporte une entrée multicanal dans les une ou plusieurs couches convolutives,
où la détermination (130) d'une position prédite en mettant à jour une position prédite précédemment avec au moins une parmi la prédiction de déplacement et l'au moins une prédiction de position absolue comporte la mise à jour d'une position prédite précédemment avec la prédiction de déplacement et la prédiction de position absolue supplémentaire.

7. Procédé mis en œuvre par ordinateur de la revendication 6, où la création de représentations graphiques (830) sur la base de données de champ magnétique comporte :

la sélection d'un sous-ensemble de valeurs de champ magnétique de la série temporelle de valeurs de champ magnétique, et
la transformation du sous-ensemble de valeurs de champ magnétique ou d'une projection du sous-ensemble de valeurs de champ magnétique en une ou plusieurs images bidimensionnelles.

8. Procédé mis en œuvre par ordinateur de la revendication 6 ou de la revendication 7, où les représentations graphiques comportent au moins un parmi un diagramme de récurrence, RP, un Gramian Angular Summation Field, GASF, un Gramian Angular Difference Field, GADF, et un Markov Transition Field, MTF.

9. Procédé mis en œuvre par ordinateur de l'une des revendications 6 à 8, où le réseau neuronal comporte une ou plusieurs couches récurrentes, et où les une ou plusieurs couches récurrentes suivent les une ou plusieurs couches convolutives.

**10.** Procédé mis en œuvre par ordinateur de l'une des revendications 6 à 9,
où une première représentation graphique, créée conformément à un premier procédé, et une seconde représentation graphique, créée conformément à un second procédé différent du premier procédé, sont introduites simultanément dans l'entrée multicanal vers l'une ou plusieurs couches convolutives, où la première représentation graphique et la seconde représentation graphique sont obtenues à partir d'un même ensemble de valeurs de champs magnétiques.

**11.** Procédé mis en œuvre par ordinateur de l'une des revendications 6 à 10, où le réseau neuronal est initialisé avec une ou plusieurs positions de départ obtenues à partir d'un système de positionnement.

**12.** Procédé mis en œuvre par ordinateur de l'une des revendications 6 à 11, où le réseau neuronal est entraîné sur la base de caractéristiques du champ magnétique terrestre dans un bâtiment pour déterminer la position du capteur dans le bâtiment.

**13.** Procédé mis en œuvre par ordinateur de l'une des revendications 6 à 12, où la détermination (840) d'une position absolue du dispositif électronique portable comporte l'entrée, dans le réseau neuronal, d'un ensemble de représentations visuelles, associé à un premier horodatage, parmi les représentations visuelles et au moins l'un des éléments suivants :

(i) une ou plusieurs positions déterminées précédemment,
(ii) des vecteurs de caractéristiques déterminés précédemment, et
(iii) un ou plusieurs ensembles de représentations visuelles associés à des horodatages respectifs différents du premier horodatage, et/ou

où le procédé comporte en outre la génération, par le capteur, des données de champ magnétique.

**14.** Appareil (400, 402) comportant un ou plusieurs processeurs (412), les un ou plusieurs processeurs (412) étant configurés pour mettre en œuvre le procédé (100) de l'une des revendications 1 à 13.

**15.** Un ou plusieurs supports de stockage lisibles par ordinateur (413) sur lesquels sont stockées des instructions exécutables par ordinateur qui, lorsqu'elles sont exécutées par un ou plusieurs processeurs (412), mettent en œuvre le procédé (100) de l'une des revendications 1 à 13.

<u>100</u>

```
┌─────────────────────────────┐
│   generate absolute position │ ⟋110
│   predictions from radio signal data │
│   and magnetic field data   │
└─────────────────────────────┘
              │
              ▼
┌─────────────────────────────┐
│   generate displacement prediction │ ⟋120
│   from inertial sensors data │
└─────────────────────────────┘
              │
              ▼
┌─────────────────────────────┐
│   update a previously predicted │
│   position with absolute position │ ⟋130
│   prediction and displacement │
│   prediction                │
└─────────────────────────────┘
              │
              ▼
┌─ ─ ─ ─ ─ ─ ─ ─ ─ ─ ─ ─ ─ ─ ┐
│       map-free projection    │ ⟋140
└─ ─ ─ ─ ─ ─ ─ ─ ─ ─ ─ ─ ─ ─ ┘
```

FIG. 1

200

FIG. 2

FIG. 3

FIG. 4

FIG. 5

<u>600</u>

```
┌────────────────────────────────┐
│     train activity classifier  │──── 610
└────────────────────────────────┘
                │
                ▼
┌────────────────────────────────┐
│     train landmark classifier  │──── 620
└────────────────────────────────┘
                │
                ▼
┌────────────────────────────────┐
│     generate pseudo-labels     │──── 630
└────────────────────────────────┘
                │
                ▼
┌────────────────────────────────┐
│    train neural network for PDR│──── 640
└────────────────────────────────┘
```

FIG. 6

FIG. 7A

FIG. 7B

800

calibrating a sensor — 810

generating magnetic field data by the sensor — 820

creating graphical representations based on the magnetic field data of the sensor — 830

determining a position of the sensor based on the graphical representations using a neural network — 840

determining a trajectory of the sensor based on the determined position of the sensor and a previously determined position of the sensor — 850

FIG. 8

FIG. 9

FIG. 10A

FIG. 10B

FIG. 11

FIG. 12

EP 4 001 948 B1

Peak detection → Candidate refinement → Landmark selection

FIG. 13

FIG. 14

**REFERENCES CITED IN THE DESCRIPTION**

**Patent documents cited in the description**

- US 20160227366 A1
- US 20180259350 A1

- EP 19306204

**Non-patent literature cited in the description**

- **DAVIDSON** ; **PICHÉ**. A survey of selected indoor positioning methods for Smartphones. *IEEE Communications Surveys Tutorials*, vol. 19 (2), 1347-1370
- Towards ubiquitous indoor location based services and indoor navigation.. **GRESSMANN et al.** Workshop on Positioning Navigation and Communication, WPNC. IEEE, 2010, 107-112
- **KHALAJMEHRABADI et al.** Modern Wlan fingerprinting indoor positioning methods and deployment challenges. *IEEE Communications Surveys Tutorials*, 2017, vol. 19 (3), 1974-2002
- **MA et al.** Wifi sensing with channel state information: A survey. *ACM Comput. Surv.*, June 2019, vol. 52 (3), 46-1, 46-36
- **WANG et al.** Pedestrian Stride-Length Estimation Based on LSTM and Denoising Autoencoders. *Sensors*, 2019, vol. 19 (4)
- **FERRIS et al.** Wifi-slam using gaussian process latent variable models. *Proc. 20th Intern. Joint Conference on Artificial Intelligence (IJCAI)*, 2007, 2480-2485
- **YUANET et al.** Efficient Wifi fingerprint training using semi-supervised learning. *Ubiquitous Positioning Indoor Navigation and Location Based Service*, 2014, 148-155
- **YOO** ; **JOHANSSON**. Semi-supervised learning for mobile robot localization using wireless signal strengths. *Intern. Conf. Indoor Positioning and Indoor Navigation (IPIN)*, 2017, 1-8
- Semi-supervised variational autoencoder for Wifi indoor localization. **CHIDLOVSKII** ; **ANTSFELD**. Intern. Conf. Indoor Positioning and Indoor Navigation (IPIN). IEEE, 2019, 1-8
- **GU et al.** Indoor localization improved by spatial context - a survey. *ACM Comput. Surv*, July 2019, vol. 52 (3), 64-1, 64-35

- **SHIN et al.** Adaptive step length estimation algorithm using low-cost mems inertial sensors. *IEEE Sensors Applications Symposium*, 2007, 1-5
- **LEE et al.** Accurate magnetic indoor localization using deep learning. *Sensors*, 2018
- **SOUSA LIMA et al.** Human activity recognition using inertial sensors in a smartphone: An overview. *Sensors*, 2019, vol. 19 (14), 3213
- **WANG et al.** Indoor localization using smartphone magnetic and light sensors: a deep LSTM approach. *MONET*, 2020, vol. 25 (2), 819-832
- **DENG et al.** Continuous indoor positioning fusing wifi, smartphone sensors and landmarks. *Sensors*, 2016, vol. 16 (09)
- **GU YANLEI et al.** Integration of positioning and activity context information for lifelog in urban city area. *NAVIGATION: JOURNAL OF THE INSTITUTE OF NAVIGATION, INSTITUTE OF NAVIGATION*, 01 March 2020, vol. 67 (1)
- **XIE ANG et al.** Learning While Tracking: A Practical System Based on Variational Gaussian Process State-Space Model and Smartphone Sensory Data. *2020 IEEE 23RD INTERNATIONAL CONFERENCE ON INFORMATION FUSION, INTERNATIONAL SOCIETY OF INFORMATION FUSION*, 06 July 2020
- **DAVID HANLEY** ; **ALEXANDER B. FAUSTINO** ; **SCOTT D. ZELMAN** ; **DAVID A. DEGENHARDT** ; **TIMOTHY BRETL. MAGPIE**. A dataset for indoor positioning with magnetic anomalies. *Eigth International Conference of Indoor Positioning and Indoor Navigation (IPIN)*, 2017
- **CHEN**. Fusion of Wifi, smartphone sensors and landmarks using the Kalman filter for indoor localization. *Sensors*, 2015, vol. 15 (1), 715-732